# EUROPEAN PATENT APPLICATION

(11) **EP 4 632 931 A1**
(43) Date of publication of application: **15.10.2025**
(21) Application number: 23932799.2
(22) Date of filing: 22.11.2023
(51) Int. Cl.: H01M 50/414, H01M 10/056, H01M 10/0525

(54) **SOLID-STATE BATTERY CELL ASSEMBLY AND PREPARATION METHOD THEREFOR, AND BATTERY AND APPLICATION THEREOF**

(30) Priority: 14.04.2023 CN 202310398807
(71) Applicant: Contemporary Amperex Technology Co., Limited, Ningde, Fujian 352100 (CN)
(72) Inventor: YANG, Jian, Ningde, Fujian 352100 (CN); WANG, Yaohui, Ningde, Fujian 352100 (CN); WANG, Zhaoguang, Ningde, Fujian 352100 (CN); YANG, Jianrui, Ningde, Fujian 352100 (CN); SUN, Chengdong, Ningde, Fujian 352100 (CN); OUYANG, Chuying, Ningde, Fujian 352100 (CN); HUANG, Siying, Ningde, Fujian 352100 (CN)
(74) Representative: Kraus & Lederer PartGmbB
(86) International application number: PCT/CN2023/133399
(87) International publication number: WO 2024/212528

(57) **Abstract**

A solid-state battery cell assembly (10) and a preparation method therefor, a battery, and application thereof are provided. The solid-state battery cell assembly (10) is further provided with a base membrane (141) between a positive electrode (11) and a solid-state electrolyte layer (12) and/or between a negative electrode (13) and the solid-state electrolyte layer (12) that are included therein. An electrolyte solution (142) is adsorbed onto the base membrane (141). The base membrane (141) included in the solid-state battery cell assembly (10) can effectively reduce the direct contact of the contained electrolyte solution (142) with the electrodes and the solid-state electrolyte layer (12), which can reduce the consumption of the electrolyte solution (142) in the charge and discharge processes, and meanwhile, also can reduce the absorption of the electrolyte solution (142) by the solid-state electrolyte layer (12). The electrolyte solution (142) has a good and stable wetting effect on solid-solid interfaces between an electrode and the solid-state electrolyte layer (12), thereby significantly reducing the impedance between the solid-solid interfaces, so that the electrochemical performance of a battery including the solid-state battery cell assembly (10) is obviously improved.

## Description

The present application claims priority to Chinese Patent Application No. 202310398807.4, filed with the China National Intellectual Property Administration on April 14, 2023 and entitled "SOLID-STATE BATTERY CELL ASSEMBLY AND PREPARATION METHOD THEREFOR, BATTERY, AND APPLICATION THEREOF", which is incorporated herein by reference in its entirety.

### TECHNICAL FIELD

The present application relates to the technical field of batteries, and specifically to a solid-state battery cell assembly and a preparation method therefor, a battery, and application thereof.

### BACKGROUND

Solid-state batteries are a novel battery in which electrolyte is a solid, and the solid-state battery has higher energy density and better safety than a conventional liquid-state battery.

The solid-state battery contains solid-state electrolyte. Therefore, the solid-state electrolyte contained in the solid-state battery is in solid-solid interface contact with a positive electrode and a negative electrode, which is different from solid-liquid contact of the conventional liquid-state battery. However, it is found by research that it is precisely because the solid-state electrolyte of the solid-state battery is in solid-solid interface contact with the positive electrode and the negative electrode, the impedance of the solid-solid interface is relatively large, thereby greatly affecting the performance of the battery.

### Technical Problem

In view of the above problems, embodiments of the present application provide a solid-state battery cell assembly and a preparation method therefor, a positive electrode, a battery, a power consuming apparatus, and an energy storage apparatus to solve the technical problem that an existing solid-state battery cell assembly has high impedance of the solid-image interfaces between an electrode and solid-state electrolyte.

### Technical Solution

In a first aspect, embodiments of the present application provide a solid-state battery cell assembly. The solid-state battery cell assembly in an embodiment of the present application includes a positive electrode, a negative electrode, and a solid-state electrolyte layer disposed between the positive electrode and the negative electrode. A base membrane is further disposed between the positive electrode and the solid-state electrolyte layer and/or between the negative electrode and the solid-state electrolyte layer, and an electrolyte solution is adsorbed onto the base membrane.

The base membrane included in the solid-state battery cell assembly in an embodiment of the present application can effectively reduce the direct contact of the electrolyte solution adsorbed onto the base membrane with an electrode(s) (the positive electrode or/and the negative electrode) and the solid-state electrolyte layer, which can reduce the consumption of the electrolyte solution in the charge and discharge processes, and meanwhile, also can reduce the absorption of the electrolyte solution by the solid-state electrolyte layer and keep the electrolyte solution having a good and stable wetting effect on the solid-solid interface between an electrode and the solid-state electrolyte layer, thereby significantly reducing the impedance between the solid-solid interfaces, so that the electrochemical performance and the stability of the electrochemical performance of the solid-state battery are effectively improved.

In some embodiments, the amount of the electrolyte solution adsorbed onto the base membrane per unit area is 1-100 µL cm⁻². The electrolyte solution of this adsorption amount can improve the wettability of the electrolyte solution to the solid-solid interfaces between an electrode and the solid-state electrolyte layer in the solid-state battery cell assembly, thereby reducing the interface impedance.

In some embodiments, the base membrane onto which the electrolyte solution is adsorbed at least has any one of the following (1) to (3):
(1) the thickness of a single base membrane is 0.1-100 µm;
(2) ionic conductivity is 10⁻²-10⁻¹ S cm⁻¹; and
(3) electronic conductivity is > 0 but ≤ 10⁻¹⁰ S cm⁻¹.

The base membrane onto which the electrolyte solution is adsorbed and which has the above features has high ionic conductivity and low electronic conductivity, which improves the wettability to the solid-solid interfaces between an electrode and the solid-state electrolyte layer in the solid-state battery cell assembly, thereby effectively reducing the interface impedance, and increasing the energy density of the solid-state battery cell assembly 10.

In some embodiments, the base membrane is bonded to the surface of the solid-state electrolyte layer.

In some embodiments, the base membrane is bonded onto the surface of the positive electrode that faces the solid-state electrolyte layer.

In some embodiments, the base membrane is bonded onto the surface of the negative electrode that faces the solid-state electrolyte layer.

When the base membrane is stacked and bonded to the surface of the positive electrode, the surface of the solid-state electrolyte layer, and the surface of the negative electrode in the above manner, the stability of the base membrane in the solid-state battery cell assembly can be improved, thereby improving the wettability of the solid-solid contact interface between an electrode and the solid-state electrolyte layer in the solid-state battery cell assembly, reducing the impedance of the solid-solid contact interface, and meanwhile improving the safety of the solid-state battery cell assembly.

In some embodiments, the electrolyte solution at least includes any one of the following (1) to (4):
(1) the molar concentration of electrolyte contained in the electrolyte solution is 0.1-5 mol/L;
(2) the electrolyte contained in the electrolyte solution includes at least one of lithium hexafluoroarsenate (LiAsF₆), lithium perchlorate (LiClO₄), lithium tetrafluoroborate (LiBF₄), lithium hexafluorophosphate (LiPF₆), lithium bis(fluorosulfonyl)imide (LiFSI), lithium bis(trifluoromethanesulfonyl)imide (LiTFSI), lithium bis(oxalato)borate (LiBOB), and lithium difluoro(oxalato)borate (LiODFB);
(3) a solvent contained in the electrolyte solution includes at least one of cyclic carbonate, chain carbonate, cyclic carboxylate, chain carboxylate, cyclic ether, chain ether, dimethyl sulfoxide, and sulfolane; and
(4) the electrolyte solution further contains an additive.

The electrolyte solution having the above features has high ionic conductivity and low electronic conductivity, which improves the wettability to the solid-solid interfaces between an electrode and the solid-state electrolyte layer in the solid-state battery cell assembly, thereby effectively reducing the interface impedance, and improving the cycle performance of the solid-state battery cell assembly 10.

In an embodiment, the mass percentage content of the additive in the electrolyte solution is 0.1-10%.

In an embodiment, the additive includes at least one of fluoroethylene carbonate, vinylene carbonate, vinylethylene carbonate, allyl ethyl carbonate, vinyl acetate, catechol carbonate, and lithium difluoro(oxalato)borate.

The additive component of this concentration and type can effectively reduce the ohmic impedance and the charge transfer impedance of an electrode interface such as a lithium metal interface, and improve the mechanical strength of a solid electrolyte interface membrane (SEI) membrane.

In some embodiments, the base membrane at least includes any one of the following (1) to (6):
(1) porosity is 30-60%;
(2) air permeability is 100-1000 s/100 ml;
(3) liquid adsorption amount is 40-1000%;
(4) tensile strength: > 8 N/25 mm in a transverse direction, and > 15 N/25 mm in a longitudinal direction;
(5) stretch rate: > 300% in the transverse direction, and > 180% in the longitudinal direction; and
(6) puncture strength is > 20 N.

The base membrane having the above features can effectively adsorb an appropriate amount of electrolyte solution, thereby improving the wettability to the solid-solid interfaces between an electrode and the solid-state electrolyte layer, thereby reducing the impedance between the solid-solid interfaces. Meanwhile, the base membrane has good mechanical strength and stable morphology, and is not prone to deformation, thereby improving the stability of loading the electrolyte solution in the base membrane, and improving the wettability to the solid-solid interfaces between an electrode and the solid-state electrolyte layer, so that the safety performance of the solid-state battery cell assembly 10 can be effectively improved.

In some embodiments, the base membrane includes a polymer membrane. The polymer membrane can endow the base membrane with good performance of absorbing the electrolyte solution, and meanwhile with good mechanical performance, and thereby the amount and the stability of loading the electrolyte solution by the base membrane can be effectively adjusted, the wettability to the solid-solid interfaces between an electrode and the solid-state electrolyte layer is improved, and thereby the interface impedance can be reduced.

In an embodiment, a polymer of the polymer membrane includes at least one of crystalline saturated polyester, dimethyl siloxane cross-linked polymer, polyolefin, halogenated polyolefin, and an MOF structural material.

In an illustrative example, the crystalline saturated polyester includes at least one of PET, crystalline dimer acid polyester polyol, crystalline polyesterimide, polybutylene terephthalate, poly(ethylene-co-1,4-cyclohexanedimethanol terephthalate), and VYLON polyester resin.

In an illustrative example, the dimethyl siloxane cross-linked polymer includes at least one of vinyl dimethicone cross-linked polymer, amodimethicone cross-linked polymer, and aminopropyl dimethicone.

In an illustrative example, the polyolefin and the halogenated polyolefin independently include at least one of polyethylene, polypropylene, poly(1-butene), poly(4-methyl-1-pentene), polyvinyl chloride, polyvinylidene chloride, and polyvinylidene fluoride.

In an illustrative example, the MOF structural material includes at least one structural material of an IRMOF series, a ZIF series, a CPL series, an MIL series, a PCN series, and a UiO series.

In an illustrative example, the IFMOF series structural material includes at least one of IRMOF-1, IRMOF-3, IRMOF-4, IRMOF-8, IRMOF-9, IRMOF-10, IRMOF-11, IRMOF-12, IRMOF-13, IRMOF-14, IRMOF-16, IRMOF-18, IRMOF-61, IRMOF-62, IRMOF-3-AM1, Fe/IRMOF-3, Mg-IRMOF-74, IRMOF-3-OH, IRMOF-3-SH, Fe/IRMOF-3-900, and IRMOF3-sal.

In an illustrative example, the ZIF series structural material includes at least one of IF-1, ZIF-2, ZIF-4, ZIF-5, ZIF-7, ZIF-8, nZIF-8, ZIF-9, ZIF-10, ZIF-11, ZIF-12, ZIF-14, ZIF-20, ZIF-23, ZIF-60, ZIF-61, ZIF-62, ZIF-64, ZIF-65, ZIF-67, ZIF-68, ZIF-69, ZIF-70, ZIF-71, ZIF-72, ZIF-73, ZIF-74, ZIF-75, ZIF-76, ZIF-77, ZIF-78, ZIF-95, ZIF-100, ZIF-268, ZIF-224, and Zn/Co-ZIF.

In an illustrative example, the CPL series structural material includes at least one of CPL-5Cu, CPL-5Cu, CPL-5Cu, CPL-5Cu, and CPL-5Cu.

In an illustrative example, the MIL series structural material includes at least one of MIL-53Cr, MIL-100 Cr, MIL-101 Cr, MIL-100 Fe, MIL-177-LT, MIL-177-HT, MIL-45 Co, MIL-45 Fe, MIL-53AI, MIL-53 Sc, MIL-88 Sc, MIL-8, MIL-9, MIL-47, MIL-51, MIL-59, MIL-69, MIL-88, MIL-91, MIL-96, MIL-101, MIL-103, MIL-102, MIL-110, and MIL-125.

In an illustrative example, the PCN structural material includes at least one of PCN-6, PCN-9, PCN-12, PCN-13, PCN-14, PCN-18, PCN-22, PCN-51, PCN-61, PCN-63, PCN-100, PCN-129, PCN-131, PCN-132, PCN-137, PCN-149, PCN-150, PCN-222, PCN-224, PCN-308, and PCN-333.

In an illustrative example, the UiO series structural material includes at least one of UiO-66, UiO-67, and UiO-68.

The base membrane containing the above type of polymer has reasonable porosity, strong liquid adsorption capability, and stable electrochemical performance. The base membrane can stably adsorb the electrolyte solution inside macromolecule, and improve the stability of loading the electrolyte solution, thereby improving the wettability of the electrolyte solution to the solid-solid interfaces, and improving the safety performance of the solid-state battery cell assembly.

In a second aspect, an embodiment of the present application provides a preparation method for a solid-state battery cell assembly. The preparation method for the solid-state battery cell assembly in the embodiment of the present application includes the following steps:
providing a positive electrode, a negative electrode, and a solid-state electrolyte membrane;
stacking the positive electrode, the solid-state electrolyte membrane, and the negative electrode, and disposing a base membrane stacked between the positive electrode and the solid-state electrolyte membrane and/or between the negative electrode and the solid-state electrolyte membrane,
where an electrolyte solution is adsorbed onto the base membrane.

According to the preparation method for the solid-state battery cell assembly in the embodiment of the present application, a base membrane onto which an electrolyte solution is adsorbed can be formed between an electrode and a solid-state electrolyte membrane that are included in a prepared solid-state battery cell assembly, which endows the base membrane onto which the electrolyte solution is adsorbed with high ionic conductivity and low electronic conductivity, and has a good and stable wetting effect on a solid-solid interface between an electrode and the solid-state electrolyte membrane, thereby significantly reducing the impedance of the solid-solid interface.

In some embodiments, the procedure of disposing a base membrane stacked between the positive electrode and the solid-state electrolyte membrane and/or between the negative electrode and the solid-state electrolyte membrane includes the following steps:
forming the base membrane on at least one of a surface of the positive electrode, a surface of the negative electrode, and a surface of the solid-state electrolyte membrane;
loading the electrolyte solution into the base membrane; and
stacking the positive electrode, the solid-state electrolyte membrane, and the negative electrode, and making the base membrane onto which the electrolyte solution is adsorbed stacked between the positive electrode and the solid-state electrolyte layer and/or between the negative electrode and the solid-state electrolyte layer.

The base membrane is directly formed on at least one of the surface of the positive electrode, the surface of the negative electrode, and the surface of the solid-state electrolyte membrane, which can enhance the bonding strength between the base membrane and at least one of the surface of the positive electrode, the surface of the negative electrode, and the surface of the solid-state electrolyte membrane, thereby enhancing the wettability of the electrolyte solution to the solid-solid interface between an electrode (at least one of the positive electrode and the negative electrode) and the solid-state electrolyte membrane, and the structural stability of the solid-state battery cell assembly.

In an embodiment, the base membrane includes a polymer membrane, and the procedure of forming the base membrane on at least one of a surface of the positive electrode, a surface of the negative electrode, and a surface of the solid-state electrolyte membrane includes the following steps:
performing membrane-forming treatment on a mixed solution including polymer monomers, a solvent, and an initiator on the surface of the positive electrode, the surface of the negative electrode, and the surface of the solid-state electrolyte membrane to obtain a polymer precursor membrane; and
carrying out a polymer reaction on the polymer precursor membrane to produce the base membrane.

The base membrane is directly formed in situ on at least one of the surface of the positive electrode, the surface of the negative electrode, and the surface of the solid-state electrolyte membrane, which effectively enhances the bonding strength between the base membrane and the surface of the positive electrode, the surface of the negative electrode, and the surface of the solid-state electrolyte membrane.

In an illustrative example, the procedure of membrane-forming treatment includes at least one of a molecular layer deposition process, blade coating, spray coating, spin coating, and casting. The membrane-forming treatment is performed by using these methods, which can improve the quality and efficiency of the base membrane, and can adjust and improve the performance and stability of adsorbing the electrolyte solution by the base membrane.

In an embodiment, before the step of forming the base membrane on at least one of a surface of the positive electrode, a surface of the negative electrode, and a surface of the solid-state electrolyte membrane, the step of performing plasma treatment on at least one of the surface of the positive electrode, the surface of the negative electrode, and the surface of the solid-state electrolyte membrane is further included, the base membrane being formed on the surface subjected to the plasma treatment. Performing the plasma treatment on a base membrane carrier can etch a corresponding surface to remove an impurity layer, a defect layer, and the like on the surface, and can further increase the surface energy of the surface, thereby improving the bonding strength between the base membrane and the at least one of the surface of the positive electrode, the surface of the negative electrode, and the surface of the solid-state electrolyte membrane.

In some embodiments, the procedure of disposing a base membrane stacked between the positive electrode and the solid-state electrolyte membrane and/or between the negative electrode and the solid-state electrolyte membrane includes the following steps:
providing a base membrane;
loading the electrolyte solution into the base membrane; and
stacking the positive electrode, the solid-state electrolyte membrane, the negative electrode, and the base membrane onto which the electrolyte solution is adsorbed.

By adopting a method for solely preparing the base membrane onto which the electrolyte solution is adsorbed, the base membrane onto which the electrolyte solution can be prepared synchronously with the positive electrode, the negative electrode, and the solid-state electrolyte membrane, thereby effectively improving the efficiency and flexibility of preparing the solid-state battery cell assembly, and also improving the quality stability of the solid-state battery cell assembly.

In a third aspect, an embodiment of the present application further provides a battery. The battery in the embodiment of the present application includes the solid-state battery cell assembly in the foregoing embodiments of the present application or the solid-state battery cell assembly prepared by the preparation method for the solid-state battery cell assembly in the foregoing embodiments of the present application.

The cycle performance of the battery in the embodiment of the present application is significantly improved, and the electrochemical performance such as the rate and the safety of the battery is also significantly improved.

In a fourth aspect, an embodiment of the present application further provides a power consuming apparatus. The power consuming apparatus in the embodiment of the present application includes the battery according to the foregoing embodiments of the present application, where the battery is configured to supply electric energy. The power consuming apparatus in the embodiment of the present application has a long standby time or a long endurance time.

In a fifth aspect, an embodiment of the present application further provides an energy storage apparatus, including the battery according to the foregoing embodiments of the present application. The capacity of the energy storage apparatus in the embodiment of the present application can be improved, and the service life of the energy storage apparatus can be prolonged.

The above description only refers to an overview of the technical solution of the present application. In order to understand the technical means of the present application more clearly, it can be implemented according to the content of the description. In order to make the above and other purposes, features and advantages of the present application more apparent, the specific implementations of the present application are listed below.

### BRIEF DESCRIPTION OF THE DRAWINGS

Various other advantages and benefits will become apparent to those of ordinary skill in the art upon reading the following detailed description of the preferred implementations. The accompanying drawings are merely used for illustrating the preferred implementations and are not intended to constitute a limitation on the present application. In addition, in all the accompanying drawings, same parts are indicated by the same reference numerals. In the accompanying drawings:
FIG. 1 is a schematic structural diagram of a solid-state battery cell assembly according to an embodiment of the present application;
FIG. 2 is another schematic structural diagram of a solid-state battery cell assembly according to an embodiment of the present application;
FIG. 3 is yet another schematic structural diagram of a solid-state battery cell assembly according to an embodiment of the present application;
FIG. 4 is a schematic structural diagram of an interface modification layer included in a solid-state battery cell assembly according to an embodiment of the present application;
FIG. 5 is a flow chart of a preparation method for a solid-state battery cell assembly according to an embodiment of the present application;
FIG. 6 is a schematic structural diagram of an implementation of a solid-state battery cell according to an embodiment of the present application;
FIG. 7 is a schematic exploded diagram of the solid-state battery cell shown in FIG. 6;
FIG. 8 is a schematic structural diagram of an implementation of a battery module according to an embodiment of the present application;
FIG. 9 is a schematic structural diagram of an implementation of a battery pack according to an embodiment of the present application;
FIG. 10 is a schematic exploded structural diagram of the battery pack shown in FIG. 9; and
FIG. 11 is a schematic diagram of an implementation of a power consuming apparatus including a secondary battery according to an embodiment of the present application as a power supply.

Reference numerals in the specific implementations are as follows:
10-solid-state battery cell assembly 10; 11-positive electrode; 12-solid-state electrolyte layer; 13-negative electrode; 14-interface modification layer; 141-base membrane; and 142-electrolyte solution;
20-solid-state battery cell; 21-case; and 22-cover plate;
30-battery module; and
40-battery pack; 41-upper box body; and 42-lower box body.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used herein are the same as those usually understood by a person skilled in the art to which the present application belongs. The terms used herein are merely intended to describe objectives of the specific embodiments, but are not intended to limit the present application. The terms "include", "have", and any variant thereof in the description, claims and the brief description of the drawings of the present application are intended to cover a non-exclusive inclusion.

In the description of the embodiments of the present application, the technical terms "first", "second", and the like are only used to distinguish different objects, and should not be understood as indicating or implying relative importance or implying the number, specific order or primary and secondary relationship of indicated technical features. In the description of the embodiments of the present application, "a plurality of" means two or more, unless otherwise expressly and specifically defined.

Embodiment mentioned in the specification means that particular features, structures, or characteristics described with reference to the embodiment may be included in at least one embodiment of the present application. The appearances of the phrase in various places in the description are not necessarily all referring to the same embodiment, nor a separate or alternative embodiment that is mutually exclusive of other embodiments. A person skilled in the art explicitly or implicitly understands that the embodiments described in the specification may be combined with other embodiments.

In the description of the embodiments of the present application, the term "and/or" is merely an association to describe the associated objects, which means that there are three types of relationships, for example, A and/or B may represent: the following three cases: only A exists, both A and B exist, and only B exists. In addition, the character "/" in this specification generally indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the present application and simplifying the description, rather than indicating or implying that the involved device or element should have a specific orientation or should be configured or operated in the specific orientation, therefore, they cannot be understood as limiting the present application.

In the description of the embodiments of the present application, unless otherwise explicitly specified or defined, the terms such as "install", "connection", "connect", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. For those of ordinary skill in the art, the specific meanings of the above terms in the present application may be interpreted according to specific situations.

In the era of energy conservation and emission reduction, new energy technologies are developing rapidly, with breakthroughs and applications in battery technology being the most significant.

With the increasingly wide application field of batteries, especially in recent years, with rapid development of electric automobiles, a power battery is rapidly developed, and the demand has sharply increased. At the same time, the safety performance of the battery has gotten more and more attention. Compared with conventional liquid batteries, solid-state batteries have higher safety, mechanical strength, and energy density, and are considered as one of important development directions of batteries in the future.

The solid-state batteries are a class of batteries using solid electrodes and solid electrolyte. The solid-state battery contains solid-state electrolyte. Therefore, the solid-state electrolyte contained in the solid-state battery is in solid-solid interface contact with a positive electrode and a negative electrode, which is different from solid-liquid contact of the conventional liquid-state battery. However, with the deepening of research on the solid-state batteries, it is found during use and research that it is precisely because the solid-state electrolyte of the solid-state battery is in solid-solid interface contact with the positive electrode and the negative electrode, the impedance of the solid-solid interface is relatively large, thereby greatly affecting the performance of the battery, and also hindering the further improvement of the performance of the solid-state battery. For example, after detection, the contact impedance value of a solid-solid interface between a positive electrode and electrolyte of an all-solid-state battery unmodified is > 100 Ω, and is more than an order of magnitude higher than the contact impedance of a solid-liquid interface between the positive electrode and liquid-state electrolyte, which seriously hinders the lithium ion transport at the interface. These inherent shortcomings result in a high polarization voltage, poor rate performance, and even inability to charge and discharge normally in the all-solid-state battery.

At present, a conventional solution for the problem that the contact impedance of the solid-solid interface between the electrode and the solid-state electrolyte of the solid-state battery is too large is to add a small amount of wetting agent or liquid-state electrolyte solution to the solid-solid interface to reduce the contact impedance of the solid-solid interface. However, since nanopores of the solid-state electrolyte will suck in the wetting agent or the electrolyte solution, and the wetting agent added to the solid-solid interface, especially the electrolyte solution, is gradually consumed in the charge and discharge processes, leading to an increase in the contact impedance of the solid-solid interface again, the solid-solid contact problem of the all-solid-state battery cannot be fundamentally solved by dropwise adding the electrolyte solution.

It is also reported that a transition layer containing trans-isomeric plastic crystals and lithium salts is added between the solid-solid interfaces of the solid-state battery, or a buffer layer containing lithium fluoride and a carbon material is added between the solid-solid interface between the positive electrode and the solid-state electrolyte layer in an attempt to improve the impedance between the solid-solid interfaces of the solid-state battery. However, it is found by research that although the transition layer containing the trans-isomeric plastic crystals and the lithium salts added to the solid-solid interface can alleviate the impedance of the solid-solid interface to a certain extent, the poor consistency of the buffer layer formed by the solidification of the trans-isomeric plastic crystals still leads to low ionic conductivity of the solid-solid interface, which is not ideal for the impedance of the solid-solid interface. The lithium fluoride contained in the buffer layer containing the lithium fluoride and the carbon material added to the solid-solid interface is electrochemically inert and almost electrically insulating (both ionic conductivity and electronic conductivity are very low). The carbon material has high electronic conductivity, but both are a solid-phase material, so that the effects of improving the solid-solid interface contact between the positive electrode and solid-state electrolyte and thereby reducing the interface impedance cannot be achieved.

In order to effectively reduce the impedance between the solid-solid interfaces of the solid-state battery and keep the stable low impedance of the solid-solid interface, it is found by research that the direct contact of an electrode and the solid-state electrolyte with the electrolyte solution can be effectively reduced by adsorbing the electrolyte solution into the base membrane to form a composite membrane, and disposing the composite membrane between the solid-solid interfaces to serve as an interface modification layer between the electrode and a solid-state electrolyte interface, and thereby the consumption of the electrolyte solution in the charge and discharge processes can be effectively reduced, and meanwhile, the absorption of the solid-state electrolyte to the electrolyte solution is also reduced, which guarantees the stability of loading the electrolyte solution by the base membrane, and endows the composite membrane formed by the electrolyte solution and the base membrane with high ionic conductivity and low electronic conductivity, and has a good wetting effect on the solid-solid interface, thereby significantly reducing the impedance between the solid-solid interfaces, and thus effectively improving the electrochemical performance of the solid-state battery. Based on this research, the following solution of the present application are proposed.

### Solid-state battery cell assembly

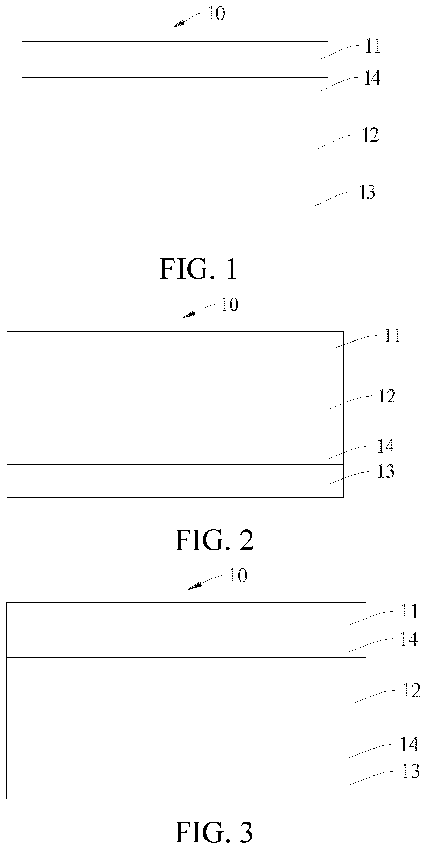

In a first aspect, embodiments of the present application provide a solid-state battery cell assembly. In some embodiments, the structure of the solid-state battery cell assembly in an embodiment of the present application is as shown in FIG. 1 to FIG. 4. The solid-state battery cell assembly 10 in the embodiment of the present application includes a positive electrode 11, a negative electrode 13, and a solid-state electrolyte layer 12 disposed between the positive electrode 11 and the negative electrode 13. An interface modification layer 14 is further disposed between the positive electrode 11 and the solid-state electrolyte layer 12 and/or between the negative electrode 13 and the solid-state electrolyte layer 12.

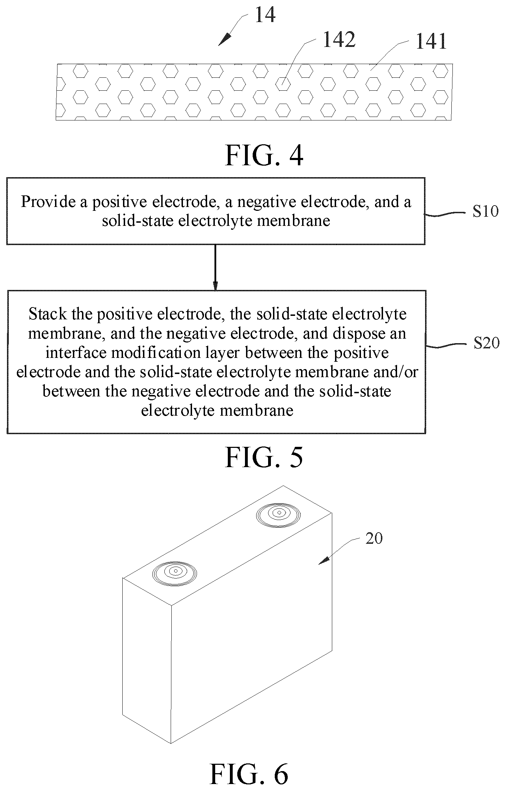

The structure of the interface modification layer 14 included in the solid-state battery cell assembly 10 in the embodiment of the present application is as shown in FIG. 4. The interface modification layer 14 includes a base membrane 141, and an electrolyte solution 142 is adsorbed onto the base membrane 141. Based on a structure defined by the interface modification layer 14, it can be understood that the base membrane 141 is disposed between the positive electrode 11 and the solid-state electrolyte layer 12 and/or between the negative electrode 13 and the solid-state electrolyte layer 12, and the electrolyte solution 142 is adsorbed in the base membrane 141.

In the solid-state battery cell assembly 10 in the embodiment of the present application, the interface modification layer 14 included therein refers to a composite membrane structure composed of the base membrane 141 and the electrolyte solution 142 adsorbed therein. The base membrane 141 adsorbing the electrolyte solution 142 refers to that the electrolyte solution 132 is disposed or fills in the base membrane 141, as shown in FIG. 4.

Therefore, in the interface modification layer 14, the base membrane 141 constitutes a carrier for the electrolyte solution 142, and can effectively adsorb the electrolyte solution 142 inside the base membrane 141, thereby improving the stability of loading the electrolyte solution 142 in the interface modification layer 14, and endowing the interface modification layer 14 with high ionic conductivity and low electronic conductivity. The interface modification layer 14 is disposed between solid-solid interfaces between the positive electrode 11 and the solid-state electrolyte layer 12 and/or between solid-solid interfaces between the negative electrode 13 and the solid-state electrolyte layer 12, that is, the interface modification layer is disposed between solid-solid interfaces between an electrode and the solid-state electrolyte layer 12. In this way, based on the structural feature of the interface modification layer 14, the direct contact of the electrolyte solution 142 contained in the interface modification layer 14 with the electrode (the positive electrode 11 or/and the negative electrode 13) and the solid-state electrolyte layer 12 can be effectively reduced, and thereby the consumption of the electrolyte solution 142 in the charge and discharge processes can be effectively reduced, and meanwhile, the absorption of the electrolyte solution 142 by the solid-state electrolyte layer 12 can be also reduced, and the interface modification layer 14 is kept having a good and stable wetting effect on the solid-solid interfaces between the electrode (the positive electrode 11 or/and the negative electrode 13) and the solid-state electrolyte layer 12, thereby significantly reducing the impedance between the solid-solid interfaces, so that the electrochemical performance such as the cycle performance and the stability of the electrochemical performance of the solid-state battery are effectively improved.

The solid-state electrolyte layer 12 included in the solid-state battery cell assembly 10 in the embodiment of the present application is disposed between the positive electrode 11 and the negative electrode 13, which can be understood as that the positive electrode 11, the solid-state electrolyte layer 12, and the negative electrode 13 are stacked sequentially. Specifically, the solid-state electrolyte layer 12 has two opposite surfaces, the positive electrode 11 is disposed close to one surface of the solid-state electrolyte layer 12, and the negative electrode 13 is disposed close to the other surface of the solid-state electrolyte layer 12. When the solid-solid interface between the positive electrode 11 and the solid-state electrolyte layer 12 does not contain the interface modification layer 14 or other functional membrane layers, the positive electrode 11 and the solid-state electrolyte layer 12 are stacked. Similarly, when the solid-solid interface between the negative electrode 13 and the solid-state electrolyte layer 12 does not contain the interface modification layer 14 or other functional membrane layers, the negative electrode 13 and the solid-state electrolyte layer 12 are stacked.

Therefore, in an embodiment, the interface modification layer 14 is disposed between the positive electrode 11 and the solid-state electrolyte layer 12 and/or between the negative electrode 13 and the solid-state electrolyte layer 12, which can be understood as being stacked.

The interface modification layer 14 is further disposed between the positive electrode 11 and the solid-state electrolyte layer 12 and/or between the negative electrode 13 and the solid-state electrolyte layer 12, which may at least include the following solutions:

In an embodiment, as shown in FIG. 1, the interface modification layer 14 is disposed between the positive electrode 11 and the solid-state electrolyte layer 12. At this time, the interface modification layer 14 is not disposed between the negative electrode 13 and the solid-state electrolyte layer 12.

In an embodiment, based on a position where the interface modification layer 14 is disposed shown in FIG. 1, one surface of the interface modification layer 14 can be stack-bonded to the surface of the solid-state electrolyte layer 12 close to the positive electrode 11, and the other surface of the solid-state electrolyte layer can be attached to the surface of the positive electrode 11. In an embodiment, one surface of the interface modification layer 14 can also be stack-bonded to the surface of the positive electrode 11 close to the solid-state electrolyte layer 12, and the other surface of the solid-state electrolyte layer can be attached to the surface of the solid-state electrolyte layer 12. In an embodiment, one surface of the interface modification layer 14 can also be stack-bonded to the surface of the solid-state electrolyte layer 12 close to the positive electrode 11, and the other surface of the solid-state electrolyte layer is stack-bonded to the surface of the positive electrode 11 close to the solid-state electrolyte layer 12.

In an embodiment, as shown in FIG. 2, the interface modification layer 14 is disposed between the negative electrode 13 and the solid-state electrolyte layer 12. At this time, the interface modification layer 14 is not disposed between the positive electrode 11 and the solid-state electrolyte layer 12.

In an embodiment, based on a position where the interface modification layer 14 is disposed shown in FIG. 2, one surface of the interface modification layer 14 can be bonded onto the surface of the solid-state electrolyte layer 12 close to the negative electrode 13 in a stacked manner, and the other surface of the solid-state electrolyte layer can be attached to the surface of the negative electrode 13. In an embodiment, one surface of the interface modification layer 14 can also be stack-bonded to the surface of the negative electrode 13 close to the solid-state electrolyte layer 12, and the other surface of the solid-state electrolyte layer can be attached to the surface of the solid-state electrolyte layer 12. In an embodiment, one surface of the interface modification layer 14 can also be stack-bonded to the surface of the solid-state electrolyte layer 12 close to the negative electrode 13, and the other surface of the solid-state electrolyte layer is stack-bonded to the surface of the negative electrode 13 close to the solid-state electrolyte layer 12.

In an embodiment, as shown in FIG. 3, the interface modification layer 14 is disposed between the positive electrode 11 and the solid-state electrolyte layer 12. At this time, the interface modification layer 14 is also disposed between the negative electrode 13 and the solid-state electrolyte layer 12.

In an embodiment, based on a position where the interface modification layer 14 is disposed shown in FIG. 3, for how the interface modification layer 14 disposed between the positive electrode 11 and the solid-state electrolyte layer 12 is disposed with the surface of the positive electrode 11 and the surface of the solid-state electrolyte layer 12, refer to how the interface modification layer 14 is disposed with the surface of the positive electrode 11 and the surface of the solid-state electrolyte layer 12 in FIG. 1. For how the interface modification layer 14 disposed between the negative electrode 13 and the solid-state electrolyte layer 12 is disposed with the surface of the negative electrode 13 and the surface of the solid-state electrolyte layer 12, refer to how the interface modification layer 14 is disposed with the surface of the negative electrode 13 and the surface of the solid-state electrolyte layer 12 in FIG. 2.

The above stack-bonding can be understood as that an external force needs to be applied when two layers are separated. For example, when a surface of the interface modification layer 14 and a surface of the solid-state electrolyte layer 12 are stack-bonded, a certain external force needs to be applied when the two membrane layers are separated. The above attachment is relative to the stack-bonding, and can be understood as that an external force does not need to be applied when two layers are separated. For example, when a surface of the interface modification layer 14 is attached to a surface of the solid-state electrolyte layer 12, an external force does not need to be applied when the two membrane layers are separated.

When the interface modification layer 14 is stack-bonded to the surface of the positive electrode 11, the surface of the solid-state electrolyte layer 12, and the surface of the negative electrode 13, the stability of the interface modification layer 14 in the solid-state battery cell assembly 10 can be improved, thereby improving the wettability of the solid-solid contact interface between an electrode and the solid-state electrolyte layer 12 in the solid-state battery cell assembly 10, and thereby reducing the impedance of the solid-solid contact interface, and meanwhile, improving the safety of the solid-state battery cell assembly 10.

Based on the function of the interface modification layer 14 in the solid-state battery cell assembly 10 in the embodiment of the present application, since the interface modification layer 14 is disposed both between the positive electrode 11 and the solid-state electrolyte layer 12 and between the negative electrode 13 and the solid-state electrolyte layer 12 shown in FIG. 3, the wettability to the solid-solid interfaces between an electrode and the solid-state electrolyte layer 12 of the solid-state battery cell assembly 10 in the embodiment of the present application shown in FIG. 3 is good, and the impedance is lower than that of the solid-state battery cell assembly 10 in the embodiment of the present application shown in FIG. 2 and FIG. 3.

In an embodiment, as shown in FIG. 1, the interface modification layer 14 is disposed between the positive electrode 11 and the solid-state electrolyte layer 12. At this time, the interface modification layer 14 is not disposed between the negative electrode 13 and the solid-state electrolyte layer 12.

In an embodiment, as shown in FIG. 2, the interface modification layer 14 is disposed between the negative electrode 13 and the solid-state electrolyte layer 12. At this time, the interface modification layer 14 is not disposed between the positive electrode 11 and the solid-state electrolyte layer 12.

In an embodiment, as shown in FIG. 3, the interface modification layer 14 is disposed between the positive electrode 11 and the solid-state electrolyte layer 12. At this time, the interface modification layer 14 is also disposed between the negative electrode 13 and the solid-state electrolyte layer 12.

In an embodiment, the positive electrode 11 included in the solid-state battery cell assembly 10 in the embodiment of the present application may include a positive electrode current collector and a positive electrode active layer bonded to the positive electrode current collector. The positive electrode active layer can be bonded to the surface of the positive electrode current collector. Of course, when the positive electrode current collector is of a porous structure, the positive electrode active layer can also be embedded in the positive electrode current collector.

The positive electrode current collector is generally a structure or part that can collect a current, which may be various materials in the art that are suitable for being used as a positive electrode current collector of an electromagnetic energy storage apparatus. As in an illustrative example, the positive electrode current collector may be generally plate-like, and the material of the positive electrode current collector may include, but is not limited to, metal foil, and more specifically, may include, but is not limited to, nickel foil and aluminum foil. As in an illustrative example, the positive electrode 11 is a positive electrode plate, that is, the positive electrode current collector is plate-like, and has two opposite surfaces, and the positive electrode active layer is bonded onto one surface or both surfaces of the plate-like positive electrode current collector. Of course, when the plate-like positive electrode current collector is of a porous structure, the positive electrode active layer may be further bonded in the porous structure of the plate-like positive electrode current collector.

The positive electrode active layer included in the positive electrode 11 may contain components such as a positive electrode active material, a conductive agent, and a binder. The types and content of the components such as the positive electrode active material, the binder, and the conductive agent are not specifically limited, and may be selected according to actual requirements.

As in an illustrative example, the positive electrode active material may include at least one of a lithium iron phosphate positive electrode material, a ternary positive electrode material, a lithium-rich manganese positive electrode material, and the like.

In an illustrative example, the binder may include one or more of polyvinylidene chloride, soluble polytetrafluoroethylene, styrene butadiene rubber, hydroxypropyl methyl cellulose, methylcellulose, carboxymethylcellulose, poly(vinyl alcohol), acrylonitrile copolymer, sodium alginate, chitosan, and a chitosan derivative.

In an illustrative example, the conductive agent may include one or more of graphite, carbon black, acetylene black, graphene, carbon fiber, C60 and carbon nanotubes.

In an embodiment, the negative electrode 13 included in the solid-state battery cell assembly 10 in the embodiment of the present application may be similar to the positive electrode in structure. For example, the negative electrode may include a negative electrode current collector and a negative electrode active layer bonded to the negative electrode current collector. The negative electrode active layer can be bonded to the surface of the negative electrode current collector. Of course, when the negative electrode current collector is of a porous structure, the negative electrode active layer can also be embedded in the negative electrode current collector.

The negative electrode current collector is generally a structure or part that can collect a current as well, which may be various materials in the art that are suitable for being used as a negative electrode current collector of an electromagnetic energy storage apparatus. As in an illustrative example, the negative electrode current collector may be generally plate-like, and the material of the negative electrode current collector may include, but is not limited to, metal foil, and more specifically, may include, but is not limited to, copper foil. As in an illustrative example, the negative electrode 13 is a negative electrode plate, that is, the negative electrode current collector is plate-like, and has two opposite surfaces, and the negative electrode active layer is bonded onto one surface or both surfaces of the plate-like negative electrode current collector. Of course, when the plate-like negative electrode current collector is of a porous structure, the negative electrode active layer may be further bonded in the porous structure of the plate-like negative electrode current collector.

The negative electrode active layer included in the negative electrode 13 may contain components such as a negative electrode active material, a conductive agent, and a binder. The types and content of the components such as the negative electrode active material, the binder, and the conductive agent are not specifically limited, and may be selected according to actual requirements.

As in an illustrative example, the negative electrode active material may include at least one of a carbon-based material, a silicon-based material, and the like.

In an illustrative example, the binder may include one or more of soluble styrene butadiene rubber (SBR), sodium carboxymethylcellulose (CMC, a polyacrylic binder (PA series), and the like.

In an illustrative example, the conductive agent may include one or more of graphite, carbon black, acetylene black, graphene, carbon fiber, C60 and carbon nanotubes.

In addition, the negative electrode 13 may also be a lithium metal negative electrode.

In an embodiment, the solid-state electrolyte layer 12 included in the solid-state battery cell assembly 10 in the embodiment of the present application may include at least one of inorganic solid electrolyte (ISE), solid polymer electrolyte (SPE), composite polymer electrolyte (CPE), and the like. The inorganic solid electrolyte (ISE) may include inorganic solid-state electrolyte such as oxide, sulfide, and halide. As in an illustrative example, the oxide may include at least one of garnet-type lithium lanthanum zirconium oxide (LLZO), NASICON-type oxide, LISICON-type oxide, where the NASICON-type oxide solid-state electrolyte is an AM'M"P₃O₁₂ molecular formula sodium superionic conductor, and A in the molecular formula is usually a monovalent transport cation, including, e.g., at least one alkali metal ion from Na, K, Li and the like, and M' and M" may be either divalent or trivalent cations (including, e.g., at least one of Zn²⁺, Mg²⁺, Ni²⁺, Cr³⁺, Al³⁺, Sc³⁺, Fe³⁺, In³⁺, Y³⁺ and the like), or tetravalent or pentavalent cations (including, e.g., at least one of Ti⁴⁺, Zr⁴⁺, Ge⁴⁺, Sn⁴⁺, V⁵⁺, Nb⁵⁺, As⁵⁺ and the like). In addition, P^{5 +}can also be doped or substituted by other high valence ions such as Si⁴⁺, V⁵⁺, Nb⁵⁺ and the like. In an illustrative example, the NASICON-type oxide solid-state electrolyte may be, but is not limited to, Na₃Zr₂Si₂PO₁₂.

The LISICON-type oxide solid-state electrolyte is a lithium ion conductor, which contains a sturdy three-dimensional anion framework. Framework ions provide a transport channel for migratable lithium ions. Extra-framework Li⁺ is in a gap position, which is migratable and conductive, and lithium ions in the gap have good exchange capacity with protons. In an illustrative example, the LISICON-type oxide solid-state electrolyte may be, but is not limited to, Li₄₋ₓGe₁₋ₓPₓS₄, where x may be 0.01 to 0.99. In an illustrative example, the x value may be a typical but non-restrictive value such as 0.01, 0.05, 0.1, 0.5, 0.75, 0.9, 0.99, or the like.

The sulfide may include at least one of Li₂S-P₂S₅, Li₂S-SiS₂, and Li₂S-B₂S₃, and the halide may include LiaMX₄, LiaMX₆ and LiaMX₈, where M may include at least one of metals such as Mn, Zn, Fe, Al, and Yb, and X may include at least one of halogens such as F, Cl, Br, and I.

The base membrane 141 included in the interface modification layer 14 included in the solid-state battery cell assembly 10 in the embodiment of the present application includes determines the basic performance of the interface modification layer 14, and determines the mechanical performance, the safety performance and other performance of the interface modification layer 14. Meanwhile, the base membrane also determines the amount of the electrolyte solution 142 contained in the interface modification layer 14 and the stability of loading the electrolyte solution 142. Since the base membrane 141 adsorbs the electrolyte solution 142, in some embodiments, the base membrane 141 contains a porous structure. The porous structure can effectively adsorb the electrolyte solution 142 and improve the stability of loading the electrolyte solution 142, thereby improving the wettability to the solid-solid interfaces between an electrode and the solid-state electrolyte layer 12 in the interface modification layer 14, thereby reducing the impedance between the solid-solid interfaces.

In some embodiments, the base membrane 141 included in the interface modification layer 14 at least includes any one of the following (1) to (6):
(1) the porosity of the base membrane 141 may be 30-60%, and it may further be 40-60%, 40-50%, or the like. In an illustrative example, the porosity may be typical but non-restrictive porosity of 30%, 35%, 40%, 45%, 50%, 55%, 60%, or the like. The porosity refers to a percentage of the total volume of pores in the base membrane 141 to the total volume of the base membrane 141 in a natural state. The porosity within this range enables the base membrane 141 to effectively adsorb an appropriate amount of electrolyte solution 142, thereby improving the wettability to the solid-solid interfaces between an electrode and the solid-state electrolyte layer 12, thereby reducing the impedance between the solid-solid interfaces; and meanwhile, the stability of adsorbing the electrolyte solution 142 in the base membrane 141 can be improved, thereby effectively reducing the self-discharge rate of the solid-state battery cell assembly 10 in the embodiment of the present application.
(2) The air permeability of the base membrane 141 is 100-1000 s/100 ml, and it may further be 200-300 s/100 ml. In an illustrative example, the air permeability may be typical but non-restrictive air permeability of 100s/100ml, 200s/100ml, 300s/100ml, 400s/100ml, 500s/100ml, 600s/100ml, 700s/100ml, 800s/100ml, 900s/100ml, 1000s/100ml or the like. The air permeability refers to the level of difficulty of allowing gas to pass through the base membrane 141, such as the time that 100 ml of gas is allowed to pass through the base membrane 141. Therefore, 100-1000 s/100ml means that the time for 100 ml of gas to pass through the base membrane 141 is 100-1000 s. Not only can the air permeability within this range increase the amount and stability of adsorbing the electrolyte solution 142 by the base membrane 141, so that the impedance between the solid-solid interfaces in the solid-state battery cell assembly 10 is further reduced; but also the migration rate of active ions such as the lithium ions can be improved.
(3) The liquid adsorption amount of the base membrane 141 is 40-1000%, and it may further be 70-300%. In an illustrative example, the liquid adsorption amount may be typical but non-restrictive liquid adsorption amount of 40%, 100%, 200%, 300%, 400%, 500%, 600%, 700%, 800%, 900%, 1000%, or the like. The liquid adsorption amount refers to a percentage of the total weight of the base membrane 141 after absorbing the electrolyte solution 142 to the weight of the base membrane 141 before absorbing the electrolyte solution 142. The liquid adsorption amount within this range can enable the base membrane 141 to effectively adsorb an appropriate amount of electrolyte solution 142, thereby improving the wettability to the solid-solid interfaces between an electrode and the solid-state electrolyte layer 12, reducing lithium precipitation and black spots that may occur at the interface or electrode, and meanwhile, increasing the energy density of the solid-state battery cell assembly 10.
(4) The tensile strength of the base membrane 141: > 8 N/25 mm in a transverse direction, and > 15 N/25 mm in a longitudinal direction; and further, > 8 N/25 mm but < 50 N/25 mm in the transverse direction, and > 15 N/25 mm but < 100 N/25 mm in the longitudinal direction. The tensile strength refers to the tensile strength of the base membrane 141, which reflects the capability of the base membrane 141 to resist damage when the base membrane is under a pulling force.
(5) The stretch rate of the base membrane 141: > 300% in the transverse direction, and > 180% in the longitudinal direction; and further, > 300% but < 1000% in the transverse direction, and > 180% but < 500% in the longitudinal direction. The stretch rate refers to the elongation at break of the base membrane 141. The transverse direction in (4) and (5) refers to a direction perpendicular to the length of the base membrane 141, and the longitudinal direction refers to a direction along the length of the base membrane 141.
(6) The puncture strength of the base membrane 141 is > 0.3 N/µm, and the puncture strength further is > 0.5 N/µm but < 5 N/µm; the puncture strength refers to the damage resistance of the base membrane 141, such as the confinement effect, which inhibits lithium dendrites and prevents the lithium dendrites from piercing a diaphragm.
(7) The thickness of the base membrane 141 may be controlled to be 0.1-100 µm, and may be further controlled to be 1-3 µm. In an illustrative example, the thickness may be typical but non-restrictive thickness of 0.1 µm, 1 µm, 10 µm, 20 µm, 30 µm, 40 µm, 50 µm, 60 µm, 70 µm, 80 µm, 90 µm, 100 µm, or the like.

The ranges of the tensile strength, the stretch rate, and the puncture strength in the above (4) to (6) endows the base membrane 141 with good mechanical strength and stable morphology, and the base membrane is not prone to deformation, thereby improving the stability of loading the electrolyte solution 142 in the interface modification layer 14 in the base membrane 141, and improving the wettability to the solid-solid interfaces between an electrode and the solid-state electrolyte layer 12, so that the safety performance of the solid-state battery cell assembly 10 can be effectively improved. In addition, since the base membrane 141 constitutes a base body membrane layer of the interface modification layer 14, the base membrane 141 within this thickness range determines the thickness of the interface modification layer 14. The base membrane 141 within this thickness range can adsorb an appropriate amount of electrolyte solution 142, and the component exerts the above function of the interface modification layer 14, and increase the energy density of the solid-state battery cell assembly 10.

In some embodiments, the base membrane 141 included in the interface modification layer 14 includes a polymer membrane. The polymer membrane can endow the base membrane 141 with a good pore structure and good performance of adsorbing the electrolyte solution 142 of the above (1) to (6), and meanwhile with good mechanical performance, and thereby the amount and the stability of loading the electrolyte solution 142 by the base membrane 141 can be effectively adjusted, the wettability to the solid-solid interfaces between an electrode and the solid-state electrolyte layer 12 can be improved, and thereby the interface impedance can be reduced, and the safety performance of the solid-state battery cell assembly 10 can be improved.

In an embodiment, when the base membrane 141 includes a polymer membrane, a polymer of the polymer membrane includes at least one of crystalline saturated polyester, dimethyl siloxane cross-linked polymer, polyolefin, halogenated polyolefin, and an MOF structural material.

In an illustrative example, the above crystalline saturated polyester may include polyethylene terephthalate (PET), crystalline dimer acid polyester polyol, crystalline polyesterimide, polybutylene terephthalate, poly(ethylene-co-1,4-cyclohexanedimethanol terephthalate), and VYLON polyester resin.

In an illustrative example, the above dimethyl siloxane cross-linked polymer may include at least one of vinyl dimethicone cross-linked polymer, amodimethicone cross-linked polymer, and aminopropyl dimethicone.

In an illustrative example, the above polyolefin and halogenated polyolefin independently may include at least one of polyethylene, polypropylene, poly(1-butene), poly(4-methyl-1-pentene), polyvinyl chloride, polyvinylidene chloride, and polyvinylidene fluoride.

In an illustrative example, the above MOF structural material may include at least one structural material of an IRMOF series, a ZIF series, a CPL series, an MIL series, a PCN series, and a UiO series. The isoreticular metal-organic framework (IRMOF) series is a microporous crystal material formed by octahedral form of bridging with self-assembly of discrete secondary building units [Zn₄O]⁶⁺ inorganic groups and a series of aromatic carboxylic acid ligands. The zeolitic imidazolate frameworks (ZIFs) series is a zeolitic imidazolate framework material, which is an MOF material of a zeolitic structure that is synthesized by reacting Zn (III) or Co (III) with imidazole ligands. The coordination pillared-layer (CPL) series is formed by a six-coordinated metal element and neutral nitrogen-containing heterocyclic ligands such as 2,2'-dipyridyl, 4,4'-dipyridyl, and phenol. The materials of Institut Lavoisier (MIL) series is synthesized by using different transition metal elements and ligands of dicarboxylic acid such as succinic acid and glutaric acid. The porous coordination network (PCN) series contains a plurality of cuboctahedral nano-pore cages, and a pore cage-pore channel-like topological structure is formed in space. The University of Oslo (UiO) series is that an octahedral Zr (zirconium)-containing [Zr₆O₄(OH)₄] and 12 organic ligands of terephthalic acid (BDC) are connected to form a three-dimensional microporous structure including an octahedral central pore cage and eight tetrahedral angular cages.

The above polymer materials can improve the mechanical performance and the morphology stability of the base membrane 141, have reasonable porosity, strong liquid adsorption capability, and stable electrochemical performance, can stably adsorb the electrolyte solution inside macromolecule, and improve the stability of loading the electrolyte solution, thereby improving the safety performance of the solid-state battery cell assembly 10. Moreover, the polymer materials can improve the rich pore structure of the base membrane 141, thereby increasing the amount of adsorbing the electrolyte solution 142 by the base membrane 141, so that the wettability to the solid-state electrolyte layers 12 between an electrode and the solid-solid interface is improved, and thereby the solid-solid interface impedance is reduced.

The MOF structural material refer to a metal-organic frameworks material, which belongs to a coordination polymer, and have a three-dimensional pore structure. Generally, a spatial 3D extension is constituted with metal ions taken as connection points and support with organic ligands.

In an illustrative example, when the MOF structural material is the IFMOF series structural material, the IFMOF series structural material may include at least one of IRMOF-1, IRMOF-3, IRMOF-4, IRMOF-8, IRMOF-9, IRMOF-10, IRMOF-11, IRMOF-12, IRMOF-13, IRMOF-14, IRMOF-16, IRMOF-18, IRMOF-61, IRMOF-62, IRMOF-3-AM1, Fe/IRMOF-3, Mg-IRMOF-74, IRMOF-3-OH, IRMOF-3-SH, Fe/IRMOF-3-900, and IRMOF3-sal.

In an illustrative example, when the MOF structural material is the ZIF series structural material, the ZIF series structural material includes at least one of IF-1, ZIF-2, ZIF-4, ZIF-5, ZIF-7, ZIF-8, nZIF-8, ZIF-9, ZIF-10, ZIF-11, ZIF-12, ZIF-14, ZIF-20, ZIF-23, ZIF-60, ZIF-61, ZIF-62, ZIF-64, ZIF-65, ZIF-67, ZIF-68, ZIF-69, ZIF-70, ZIF-71, ZIF-72, ZIF-73, ZIF-74, ZIF-75, ZIF-76, ZIF-77, ZIF-78, ZIF-95, ZIF-100, ZIF-268, ZIF-224, and Zn/Co-ZIF.

In an illustrative example, when the MOF structural material is the CPL series structural material, the CPL series structural material includes at least one of CPL-5Cu, CPL-5Cu, CPL-5Cu, CPL-5Cu, and CPL-5Cu.

In an illustrative example, when the MOF structural material is the MIL series structural material, the MIL series structural material includes at least one of MIL-53Cr, MIL-100 Cr, MIL-101 Cr, MIL-100 Fe, MIL-177-LT, MIL-177-HT, MIL-45 Co, MIL-45 Fe, MIL-53AI, MIL-53 Sc, MIL-88 Sc, MIL-8, MIL-9, MIL-47, MIL-51, MIL-59, MIL-69, MIL-88, MIL-91, MIL-96, MIL-101, MIL-103, MIL-102, MIL-110, and MIL-125.

In an illustrative example, when the MOF structural material is the PCN series structural material, the PCN structural material includes at least one of PCN-6, PCN-9, PCN-12, PCN-13, PCN-14, PCN-18, PCN-22, PCN-51, PCN-61, PCN-63, PCN-100, PCN-129, PCN-131, PCN-132, PCN-137, PCN-149, PCN-150, PCN-222, PCN-224, PCN-308, and PCN-333.

In an illustrative example, when the MOF structural material is the UiO series structural material, the UiO series structural material includes at least one of UiO-66, UiO-67, and UiO-68.

The above MOF structural materials have good mechanical performance while having a rich pore structure, so that the amount of loading the electrolyte solution 142 by the base membrane 141 can be effectively adjusted, and stability of loading the electrolyte solution 142 can be improved, the wettability to the solid-solid interfaces between an electrode and the solid-state electrolyte layer 12 can be improved, and thereby the interface impedance can be reduced, and the safety performance of the solid-state battery cell assembly 10 can be improved.

In some embodiments, after detection, the amount of adsorbing the electrolyte solution 142 by the base membrane 141 per unit area in the foregoing various embodiments can be controlled to be 1-100 µL cm⁻², and may be further controlled to be 5-50 µL cm⁻². In an illustrative example, the amount may be typical but non-restrictive adsorption amount of 1 µL cm⁻², 10 µL cm⁻², 20 µL cm⁻², 30 µL cm⁻², 40 µL cm⁻², 50 µL cm⁻², 60 µL cm⁻², 70 µL cm⁻², 80 µL cm⁻², 90 µL cm⁻², 100 µL cm⁻², or the like The amount of adsorbing the electrolyte solution 142 by the base membrane 141 is controlled within this range, which can improve the wettability of the interface modification layer 14 to the solid-solid interfaces between an electrode and the solid-state electrolyte layer 12 in the solid-state battery cell assembly 10, and thereby reduce the interface impedance.

In some embodiments, the electrolyte solution 142 contained in the interface modification layer 14 includes at least any one of the following (1) to (4):
(1) the molar concentration of the electrolyte contained in the electrolyte solution may be 0.1-5 mol/L, and it may further be 0.5-3 mol/L. In an illustrative example, the molar concentration may be typical but non-restrictive molar concentration of 0.1 mol/L, 0.5 mol/L, 1 mol/L, 1.5 mol/L, 2 mol/L, 2.5 mol/L, 3 mol/L, 3.5 mol/L, 4 mol/L, 4.5 mol/L, 5 mol/L or the like. The electrolyte solution of this molar concentration has good wettability to the solid-solid interfaces between an electrode and the solid-state electrolyte layer 12 in the solid-state battery cell assembly 10, and thereby effectively reduces the interface impedance.
(2) The electrolyte contained in the electrolyte solution may include at least one of lithium hexafluoroarsenate (LiAsF₆), lithium perchlorate (LiClO₄), lithium tetrafluoroborate (LiBF₄), lithium hexafluorophosphate (LiPF₆), lithium bis(fluorosulfonyl)imide (LiFSI), lithium bis(trifluoromethanesulfonyl)imide (LiTFSI), lithium bis(oxalato)borate (LiBOB), and lithium difluoro(oxalato)borate (LiODFB). The lithium salts are rich in lithium, can provide a large number of active lithium ions, have performance stability, and can improve the wettability of the interface modification layer 14 to the solid-solid interfaces between an electrode and the solid-state electrolyte layer 12 in the solid-state battery cell assembly 10, thereby effectively reducing the interface impedance.
(3) A solvent contained in the electrolyte solution includes at least one of cyclic carbonate, chain carbonate, cyclic carboxylate, chain carboxylate, cyclic ether, chain ether, dimethyl sulfoxide (DMSO), and sulfolane (SL). In an illustrative example, the cyclic carbonate may include at least one of propylene carbonate (PC), ethylene carbonate (EC), and the like; the chain carbonate may include at least one of dimethyl carbonate (DMC), diethyl carbonate (DEC), and the like; the cyclic carboxylate may include y-butyrolactone (BL); the chain carboxylate may include at least one of methyl propionate (MP), methyl acetate (MA), and the like; the cyclic ether may include at least one of tetrahydrofuran (THF), 1,3-dioxolane (DOL), and the like; and the chain ether may include at least one of dimethoxymethane (DMM), 1.2-dimethoxyethane (DME), and the like. These solvents have chemical performance stability, and can improve the ionic conductivity of the electrolyte solution.
(4) The electrolyte solution further contains an additive. In an embodiment, the mass percentage of the additive in the electrolyte solution may be 0.1-10%. In an illustrative example, the mass percentage may be typical but non-restrictive content of 0.1%, 0.5%, 1%, 2%, 3%, 4%, 5%, 6%, 7%, 8%, 9%, 10%, or the like. In an illustrative example, the additive may include at least one of fluoroethylene carbonate (FEC), vinylene carbonate (VC), vinylethylene carbonate (VEC), allyl ethyl carbonate (AEC), vinyl acetate (VA), catechol carbonate (CC), and lithium difluoro(oxalato)borate (C₂BF₂LiO₄). By adding an additive component to the electrolyte solution, or further controlling the concentration and type of the additive to be the above range and type, the ohmic impedance and the charge transfer impedance of an electrode interface such as a lithium metal interface can be effectively reduced, and the mechanical strength of a solid electrolyte interface membrane (SEI) membrane can be improved.

In addition, in an embodiment, after detection, the interface modification layer 14 in various embodiments above at least has any one of the following (1) to (3):
(1) the thickness of the interface modification layer 14 is 0.1-100 µm, i.e., the thickness of the base membrane 141 above. Therefore, the thickness of the interface modification layer 14 may further be 1-3 µm. In an illustrative example, the thickness may be typical but non-restrictive thickness optionally of 0.1 µm, 1 µm, 10 µm, 20 µm, 30 µm, 40 µm, 50 µm, 60 µm, 70 µm, 80 µm, 90 µm, 100 µm, or the like;
(2) the ionic conductivity of the interface modification layer 14 is 10⁻²-10⁻¹ S cm⁻¹; and
(3) the electronic conductivity of the interface modification layer 14 is > 0 but ≤ 10⁻¹⁰ S cm⁻¹, and the electronic conductivity further is ≥ 10⁻¹⁴ S cm⁻¹ but ≤ 10⁻¹⁰ S cm⁻¹.

The interface modification layer 14 within the above thickness range has high ionic conductivity and low electronic conductivity. For example, the ionic conductivity may reach an order of magnitude of the ionic conductivity of conventional liquid-state electrolyte solution, which fully exerts the above function, and improves the wettability to the solid-solid interfaces between an electrode and the solid-state electrolyte layer 12 in the solid-state battery cell assembly 10, thereby effectively reducing the interface impedance. Meanwhile, the energy density of the solid-state battery cell assembly 10 can be increased.

### Preparation method for solid-state battery cell assembly

In a second aspect, an embodiment of the present application provides a preparation method for a solid-state battery cell assembly. The process flow of the preparation method for the solid-state battery cell assembly in the embodiment of the present application is as shown in FIG. 5. The preparation method for the solid-state battery cell assembly in the embodiment of the present application may include the following steps:
S10: Provide a positive electrode, a negative electrode, and a solid-state electrolyte membrane; and
S20: Stack the positive electrode, the solid-state electrolyte membrane, and the negative electrode, and dispose an interface modification layer between the positive electrode and the solid-state electrolyte membrane and/or between the negative electrode and the solid-state electrolyte membrane.

According to the preparation method for the solid-state battery cell assembly in the embodiment of the present application, the positive electrode in step S10 is the positive electrode 11 included in the solid-state battery cell assembly 10 in the foregoing embodiments of the present application above, the negative electrode is the negative electrode 13 included in the solid-state battery cell assembly 10 in the foregoing embodiments of the present application above, and the solid-state electrolyte membrane is the solid-state electrolyte 12 contained in the solid-state battery cell assembly 10 in the foregoing embodiments of the present application above. Therefore, stack the positive electrode, the solid-state electrolyte membrane, and the negative electrode sequentially in step S20 should be understood as that the positive electrode and the negative electrode are disposed on two opposite sides of the solid-state electrolyte membrane, respectively. After the interface modification layer is disposed between the positive electrode and the solid-state electrolyte membrane and/or between the negative electrode and the solid-state electrolyte membrane, the interface modification layer can be disposed between the positive electrode and the solid-state electrolyte membrane, as shown in FIG. 1. The interface modification layer can also be disposed between the negative electrode and the solid-state electrolyte membrane, as shown in FIG. 2. The interface modification layer can also be disposed between the positive electrode and the solid-state electrolyte membrane and between the negative electrode and the solid-state electrolyte membrane, as shown in FIG. 3. Since the preparation method for the solid-state battery cell assembly in the embodiment of the present application is the preparation method for the solid-state battery cell assembly 10 in the foregoing embodiments of the present application above, the interface modification layer formed in step S20 is the interface modification layer 14 included in the solid-state battery cell assembly 10 in the foregoing embodiments of the present application above, and then the interface modification layer formed in step S20 includes a base membrane, and an electrolyte solution is adsorbed onto the base membrane. The base membrane is the base membrane 141 included in the interface modification layer 14 of the solid-state battery cell assembly 10 in the foregoing embodiments of the present application above, and the electrolyte solution adsorbed onto the base membrane is the electrolyte solution 142 contained in the interface modification layer 14 of the solid-state battery cell assembly 10 in the foregoing embodiments of the present application. Based on the structure of the interface modification layer 14, in step S20, the base membrane stacked may also be disposed between the positive electrode and the solid-state electrolyte membrane and/or between the negative electrode and the solid-state electrolyte membrane, where the electrolyte solution is adsorbed onto the base membrane.

Therefore, according to the preparation method for the solid-state battery cell assembly in the embodiment of the present application, the interface modification layer can be formed between the electrode (the positive electrode and/or the negative electrode) and the solid-state electrolyte membrane that are included in a prepared solid-state battery cell assembly, so that the electrolyte solution is adsorbed onto the interface modification layer, the stability of loading of the electrolyte solution in the interface modification layer is enhanced, and the interface modification layer is endowed with high ionic conductivity and low electronic conductivity. Moreover, the consumption of the electrolyte solution contained in the interface modification layer in the charge and discharge processes can be effectively reduced, and meanwhile, the absorption of the electrolyte solution by the solid-state electrolyte membrane is also reduced, and the interface modification layer is kept having a good and stable wetting effect on the solid-solid interfaces between an electrode(s) (the positive electrode or/and the negative electrode) and the solid-state electrolyte membrane, thereby significantly reducing the impedance between the solid-solid interfaces, so that the electrochemical performance and the stability of the electrochemical performance of the solid-state battery are effectively improved. In addition, the preparation method for the solid-state battery cell assembly in the embodiment of the present application has controllable conditions, which can effectively guarantee that the quality and performance of the prepared solid-state battery cell assembly are stable, and the efficiency is high.

### Step S10

The positive electrode in step S10 can be prepared according to the structure of the positive electrode 11 included in the solid-state battery cell assembly 10 in the foregoing embodiments of the present application and the type of the positive electrode. As in an illustrative example, the prepared positive electrode may be, but is not limited to, a lithium iron phosphate positive electrode, a ternary positive electrode, a lithium-rich manganese positive electrode, or the like.

Similarly, the negative electrode can also be prepared according to the structure of the negative electrode 13 included in the solid-state battery cell assembly 10 in the foregoing embodiments of the present application and the type of the negative electrode. As in an illustrative example, the prepared negative electrode may be, but is not limited to, a carbon-based negative electrode, a silicon-based negative electrode, a lithium metal negative electrode, or the like.

The solid-state electrolyte membrane can also be prepared according to the type of the solid-state electrolyte layer 14 included in the solid-state battery cell assembly 10 in the foregoing embodiments of the present application. As in an illustrative example, the prepared solid-state electrolyte membrane may be, but is not limited to, an inorganic solid-state electrolyte membrane.

### Step S20

The order of the step of stacking the positive electrode, the solid-state electrolyte membrane, and the negative electrode sequentially and the step of disposing an interface modification layer between the positive electrode and the solid-state electrolyte membrane and/or between the negative electrode and the solid-state electrolyte membrane may be determined according to how the interface modification layer is formed.

As in an embodiment, when the interface modification layer is formed alone, the positive electrode, the solid-state electrolyte membrane, the negative electrode, and the interface modification layer can be stacked with reference to the structure of the solid-state battery cell assembly 10 shown in any one of FIG. 1 to FIG. 3. Alternatively, the positive electrode, the solid-state electrolyte membrane, and the negative electrode are firstly stacked, and then the interface modification layer is inserted and stacked to a corresponding position according to the structure of the solid-state battery cell assembly 10 shown in any one of FIG. 1 to FIG. 3. For example, the interface modification layer is inserted and stacked between the positive electrode and the solid-state electrolyte membrane, or inserted and stacked between the negative electrode and the solid-state electrolyte membrane, or inserted and stacked both between the positive electrode and the solid-state electrolyte membrane and between the negative electrode and the solid-state electrolyte membrane.

When the interface modification layer is directly formed on the surface of any one of structural members, namely, the positive electrode, the negative electrode, and the solid-state electrolyte membrane firstly, the interface modification layer is formed firstly, and then the positive electrode, the solid-state electrolyte membrane, and the negative electrode are stacked with reference to the structure of the solid-state battery cell assembly 10 shown in any one of FIG. 1 to FIG. 3.

As in some embodiments, the procedure of disposing an interface modification layer between the positive electrode and the solid-state electrolyte membrane and/or between the negative electrode and the solid-state electrolyte membrane in step S20 includes the following steps:
S21: form a base membrane on at least one of a surface of the positive electrode, a surface of the negative electrode, and a surface of the solid-state electrolyte membrane;
S22: load an electrolyte solution into the base membrane to form the interface modification layer; and
S23: stack the positive electrode, the solid-state electrolyte membrane, and the negative electrode, and stack the interface modification layer between the positive electrode and the solid-state electrolyte layer and/or between the negative electrode and the solid-state electrolyte layer.

The base membrane is directly formed on at least one of the surface of the positive electrode, the surface of the negative electrode, and the surface of the solid-state electrolyte membrane, that is, the interface modification layer is formed, which can enhance the bonding strength between the interface modification layer and at least one of the surface of the positive electrode, the surface of the negative electrode, and the surface of the solid-state electrolyte membrane, thereby enhancing the structural stability of the solid-state battery cell assembly 10. Meanwhile, the wettability of the interface modification layer to the solid-solid interfaces between an electrode (at least one of the positive electrode and the negative electrode) and the solid-state electrolyte membrane can be enhanced, thereby reducing the impedance of the solid-solid interface.

The base membrane formed in step S21 is the base membrane 141 included in the interface modification layer 14 of the solid-state battery cell assembly 10 in the foregoing embodiments of the present application above. Therefore, the procedure of forming a base membrane on at least one of a surface of the positive electrode, a surface of the negative electrode, and a surface of the solid-state electrolyte membrane can be determined according to the material of the base membrane.

As in an embodiment, the procedure of forming a base membrane on at least one of a surface of the positive electrode, a surface of the negative electrode, and a surface of the solid-state electrolyte membrane includes the following steps:
S211: perform membrane-forming treatment on a mixed solution including polymer monomers, a solvent, and an initiator on the surface of the positive electrode, the surface of the negative electrode, and the surface of the solid-state electrolyte membrane to obtain a polymer precursor membrane; and
S212: carry out a polymer reaction on the polymer precursor membrane to produce the base membrane.

The polymer monomer in step S211 is a polymer monomer used for forming the base membrane. In an illustrative example, the polymer monomer may be polymer monomers of crystalline saturated polyester, dimethyl siloxane cross-linked polymer, polyolefin, halogenated polyolefin, and an MOF structural material above. In an illustrative example, the polymer monomer may be a mixed monomer containing HOCH₂CH₂OH and ethylene glycol, may be a mixed monomer containing an ethylene terephthalate monomer, purified terephthalic acid (PTA), 1,4-cyclohexanedimethanol (CHDM), and ethylene glycol, may also be a mixed monomer containing dimethyl terephthalate and 1,4- butanediol, or the like. The polymer formed by these polymer monomers can endow the base membrane with good mechanical performance, stable morphology, reasonable porosity, and strong liquid adsorption capacity, so that the stability of loading the electrolyte solution is improved, thereby improving the wettability to the solid-solid interfaces between an electrode and the solid-state electrolyte in the interface modification layer, and thereby reducing the impedance of the solid-solid interface.

The solvent in step S211 should have no side effects on the positive electrode, the negative electrode, and the solid-state electrolyte membrane, and can effectively solvent components such as polymer monomers and an initiator.

The initiator in step S211 should be an initiator that can promote polymerization between the polymer monomers to produce a polymer to form a base membrane, and can be specifically selected based on the polymerization characteristic of the polymer monomers.

In an embodiment, a corresponding membrane-forming modifier such as a plastic can also be added to the mixed solution in step S211 to improve corresponding performance of the base membrane, for example, improve the mechanical performance, thereby improving stability of the interface modification layer.

In an embodiment, the procedure of membrane-forming treatment in step S211 may include at least one of a molecular layer deposition process, blade coating, spray coating, spin coating, and casting. The molecular layer deposition process refers to as molecular layer deposition (MLD), in which two reaction gases (or vapors) are alternately introduced in a form of gas pulses into a reactor, and undergo a reaction depending on adsorbed modules (for example, hydroxy or amino) left on the surface of a substrate to generate a thin membrane. The membrane-forming treatment is performed by using these methods, which can improve the quality and efficiency of the base membrane, and can adjust and improve the performance and stability of adsorbing the electrolyte solution by the base membrane.

The polymerization in step S212 can be selectively controlled and adjusted according to the characteristics of the polymer monomers and the initiator that initiates the polymerization, for example, the polymerization can be initiated by rising temperature or photo-initiated.

In some embodiments, step S21 before forming a base membrane on at least one of a surface of the positive electrode, a surface of the negative electrode, and a surface of the solid-state electrolyte membrane, the step of performing plasma treatment on at least one of the surface of the positive electrode, the surface of the negative electrode, and the surface of the solid-state electrolyte membrane may be further included, where the formed base membrane is formed on the surface subjected to the plasma treatment. In this way, plasma treatment is performed on surfaces such as a surface of the positive electrode, a surface of the negative electrode, a surface of the solid-state electrolyte membrane on which the base membrane is to be formed, so that the corresponding surfaces can be etched to remove a surface impurity layer, a defect layer and the like, and the surface energy of this surface can also be increased, thereby improving the bonding strength between the formed base membrane and at least one of the surface of the positive electrode, the surface of the negative electrode, and the surface of the solid-state electrolyte membrane.

In step S22, the electrolyte solution can be loaded into the base membrane by wetting for adsorptive loading. For example, the electrolyte solution can be dropwise added onto the base membrane for adsorption, or the base membrane can be immersed in the electrolyte solution for adsorption. The electrolyte solution in step S22 is the electrolyte solution 142 contained in the interface modification layer 14 in the solid-state battery cell assembly 10 of the foregoing embodiments of the present application above.

Regarding stacking the positive electrode, the solid-state electrolyte membrane, and the negative electrode in step S23, the positive electrode, the solid-state electrolyte membrane, and the negative electrode can be stacked according to the structure of a solid-state battery cell assembly. However, it should be guaranteed that the interface modification layer is disposed between the positive electrode and the solid-state electrolyte membrane, or between the negative electrode and the solid-state electrolyte membrane, or disposed both between the positive electrode and the solid-state electrolyte membrane and between the negative electrode and the solid-state electrolyte membrane, so that the functions of the interface modification layer to improve the wettability to the solid-solid interfaces between an electrode and the solid-state electrolyte layer in the solid-state battery cell assembly and thereby to reduce the impedance of the solid-solid interface are exerted.

When the interface modification layer is formed alone, as in an embodiment, the procedure of disposing an interface modification layer between the positive electrode and the solid-state electrolyte membrane and/or between the negative electrode and the solid-state electrolyte membrane includes the following steps:
S24: provide a base membrane;
S25: load an electrolyte solution into the base membrane to form the interface modification layer; and
S26: stack the positive electrode, the solid-state electrolyte membrane, and the negative electrode.

By adopting a method for solely preparing the interface modification layer, the interface modification layer can be prepared synchronously with the positive electrode, the negative electrode, and the solid-state electrolyte membrane, thereby effectively improving the efficiency and flexibility of preparing the solid-state battery cell assembly, and also improving the quality stability of the solid-state battery cell assembly.

For providing a base membrane in step S24, refer to the procedure of forming a base membrane in step S21 mentioned above, except that a base body for forming the base membrane is not a positive electrode, a negative electrode, or a solid-state electrolyte membrane, and other base bodies can be selected.

For loading an electrolyte solution into the base membrane in step S25, refer to the procedure of forming a base membrane in step S22 mentioned above.

For stacking in step S26, refer to stacking in step S23 mentioned above. By means of stacking, the interface modification layer is disposed between the positive electrode and the solid-state electrolyte membrane, or between the negative electrode and the solid-state electrolyte membrane, or disposed both between the positive electrode and the solid-state electrolyte membrane and between the negative electrode and the solid-state electrolyte membrane, so that the functions of the interface modification layer to improve the wettability to the solid-solid interfaces between an electrode and the solid-state electrolyte layer in the solid-state battery cell assembly and thereby to reduce the impedance of the solid-solid interface are exerted.

### Battery

In a third aspect, embodiments of the present application provide a battery, containing a solid-state battery cell assembly formed by assembling a positive electrode, a solid-state electrolyte layer, and a negative electrode. The solid-state battery cell assembly is the solid-state battery cell assembly 10 in the foregoing embodiments of the present application above.

Since the battery in the embodiment of the present application includes the solid-state battery cell assembly 10 in the foregoing embodiments of the present application, the cycle performance of the battery in the embodiment of the present application is significantly improved, and the electrochemical performance such as the rate and the safety of the battery is also significantly improved.

In an embodiment, the battery in the embodiment of the present application may include any one of a solid-state battery cell, a battery module, and a battery pack.

The solid-state battery cell refers to including a battery case and a solid-state battery cell assembly encapsulated in the battery case. There is no particular limitation on the shape of the solid-state battery cell, which can be cylindrical, square or in any other shapes. In an illustrative example, the solid-state battery cell may be a solid-state battery cell 20 of a square structure as shown in FIG. 6.

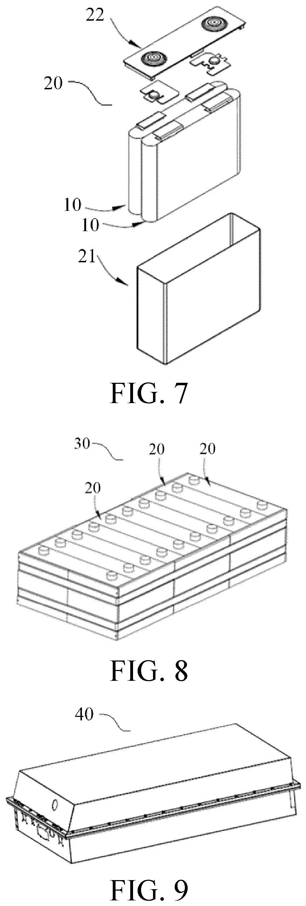

In some embodiments, as shown in FIG. 7, an outer package for the solid-state battery cell 20 may include a case 21 and a cover plate 22. The case 21 may include a bottom plate and a side plate connected to the bottom plate. The bottom plate and the side plate enclose an accommodating cavity. The case 21 is provided with an opening in communication with the accommodating cavity, and the cover plate 22 is used for covering the opening to close the accommodating cavity. The solid-state battery cell 20 in the embodiment of the present application includes the solid-state battery cell assembly 10 in the foregoing embodiments of the present application. The solid-state battery cell assembly 10 is encapsulated in an accommodating cavity. The number of the solid-state battery cell assemblies 10 included in the solid-state battery cell 20 may be one or more than one, and can be adjusted as required.

The preparation method for the solid-state battery cell 20 is well-known. The solid-state battery cell assembly 10 is placed in the outer package, and the solid-state battery cell 20 is obtained through vacuum encapsulation, standing, formation, shaping and other processes.

The battery module refers to being formed by assembling battery cells, where the battery cell includes a solid-state battery cell 20, that is, it may include a plurality of solid-state battery cells 20. The specific number of the solid-state battery cells can be adjusted according to the application and the capacity of the battery module.

In some embodiments, FIG. 8 is a schematic diagram of a battery module 30 as an example. As shown in FIG. 8, in the battery module 30, a plurality of solid-state battery cells 20 can be arranged sequentially in the length direction of the battery module 30. Of course, the solid-state battery cells can also be arranged in any other way. The plurality of solid-state battery cells 20 further may be fixed by fasteners.

Optionally, the battery module 20 may further include a housing with an accommodating space, and the plurality of solid-state battery cells 20 are accommodated in the accommodating space.

The battery pack refers to being formed by assembling the solid-state battery cells 20 above, that is, it may include a plurality of solid-state battery cells 20, where the plurality of solid-state battery cells 20 may be assembled into the battery module 30 above. The specific number of the solid-state battery cells 20 or the battery modules 30 included in the battery pack can be adjusted according to the application and the capacity of the battery pack.

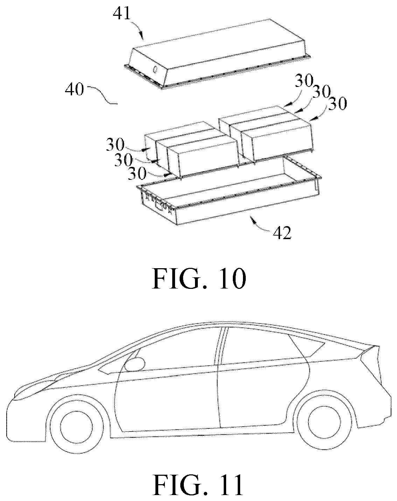

As in an embodiment, FIG. 9 and FIG. 10 are schematic diagrams of a battery pack 40 as an example. The battery pack 40 may include a battery box and a plurality of battery modules 30 disposed in the battery box. The battery box includes an upper box body 41 and a lower box body 42. The upper box body 41 is configured to cover the lower box body 42, and forms a closed space for accommodating the battery modules 30. The plurality of battery modules 30 can be arranged in the battery box in any manner.

### Power consuming apparatus

In a fourth aspect, embodiments of the present application provide a power consuming apparatus, where the power consuming apparatus includes the battery in the foregoing embodiments of the present application above, which may further be a secondary battery. The battery may be used as a power supply of the power consuming apparatus, or may be used as an energy storage unit of the power consuming apparatus. Therefore, the power consuming apparatus in the embodiment of the present application has a long standby time or a long endurance time.

The power consuming apparatus may be, but is not limited to, a mobile device (for example, a mobile phone, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like. For the power consuming apparatus, the secondary battery, the battery module, or the battery pack can be selected according to the use requirements.

FIG. 11 is a schematic diagram of a power consuming apparatus as an example. The power consuming apparatus is a full electric vehicle, a hybrid electric vehicle, a plug-in hybrid electric vehicle, or the like. To meet the requirements of the power consuming apparatus for high power and high energy density, a battery pack or a battery module may be used.

For another example, the power consuming apparatus may be a mobile phone, a tablet computer, a notebook computer, or the like. The power consuming apparatus is generally required to be light and thin, and can use the secondary battery as a power supply.

### Energy storage apparatus

In a fifth aspect, embodiments of the present application provide an energy storage apparatus, where the energy storage apparatus includes the battery in the foregoing embodiments of the present application, which may further be a secondary battery. The battery can be used as an energy storage unit of the energy storage apparatus to improve the capacity and prolong the service life of the energy storage apparatus.

### Examples

Examples of the present application will be described hereinafter. The examples described below are exemplary and only used to explain the present application, and should not be construed as a limitation on the present application. If the specific technology or conditions are not specified in the examples, the technology or conditions described in the literature in this field or the product manual shall be followed. The used reagents or instruments without manufacturer indicated are all conventional products that may be purchased in the market.

### Example 1

The embodiment provides a solid-state battery cell assembly, a solid-state battery cell, and a preparation method therefor.

The solid-state battery cell assembly in the embodiment includes a lithium iron phosphate positive electrode plate, a graphite negative electrode plate, and lithium lanthanum zirconium oxide solid-state electrolyte, and the positive electrode plate, the lithium lanthanum zirconium oxide solid-state electrolyte, and the graphite negative electrode plate are stacked sequentially. A 1 µm of PET membrane layer is stacked both between the positive electrode plate and the oxide solid-state electrolyte and between the negative electrode plate and the oxide solid-state electrolyte, and an electrolyte solution is adsorbed onto the PET membrane layer, where the content of the electrolyte solution in the PET membrane layer is 5 µL/cm², and the electrolyte solution is 1 moL/L of LiPF₆+EC/EMC (volume ratio of 1:1).

The preparation method for the solid-state battery cell assembly in the embodiment includes the following steps:
S1: take a lithium iron phosphate positive electrode plate and a graphite negative electrode plate, and etch the lithium iron phosphate positive electrode plate and the graphite negative electrode plate with Ar plasma for 30 s to obtain a lithium iron phosphate positive electrode plate and a graphite negative electrode plate which have a clean surface;
S2: take a solution of terephthalic acid and ethylene glycol and formulate a reaction precursor solution, spray each of the surfaces of the lithium iron phosphate positive electrode plate and the graphite negative electrode plate in a manner of spray coating with the precursor solution at a thickness of 1 µm, carry out the esterification reaction to synthesize bis(2-hydroxyethyl) terephthalate, and then carry out the polycondensation reaction to obtain PET;
S3: dropwise add 5 µL/cm² of electrolyte solution onto the PET membrane, and allow the electrolyte solution to totally wet the PET membrane and be adsorbed therein to form an interface modification layer; that is, obtain a lithium iron phosphate positive electrode plate and a graphite negative electrode plate of which the surfaces have a high-ionic conductivity macromolecule layer; and
S4: stack the positive electrode plate, the oxide solid-state electrolyte, and the negative electrode plate sequentially to obtain a solid-state battery cell assembly.

The solid-state battery cell assembly was placed in an outer package, and a back-end process of cell manufacturing was performed to obtain a solid-state battery cell.

### Example 2

The embodiment provides a solid-state battery cell assembly, a solid-state battery cell, and a preparation method therefor.

The solid-state battery cell assembly in the embodiment includes a ternary positive electrode plate, a lithium metal negative electrode plate, and sulfide solid-state electrolyte, and the positive electrode plate, the LiP₂S₇ sulfide solid-state electrolyte, and the negative electrode plate are stacked sequentially. An about 1.5 µm of P(VDF-HFP) membrane layer is stacked both between the positive electrode plate and the sulfide solid-state electrolyte and between the negative electrode plate and the sulfide solid-state electrolyte, an electrolyte solution is adsorbed onto the P(VDF-HFP) membrane layer, where the content of the electrolyte solution in the P(VDF-HFP) membrane layer is 3 µL/cm², and the electrolyte solution is 1 moL/L of LiTFSI+DME/DOL (volume ratio of 3:7).

The preparation method for the solid-state battery cell assembly in the embodiment includes the following steps:
S1: take an NCM811 ternary positive electrode plate and a lithium metal negative electrode plate, and etch the ternary positive electrode plate and the lithium metal negative electrode plate with Ar plasma for 60 s to obtain a ternary positive electrode plate and a lithium metal negative electrode plate which have a clean surface;
S2: deposit a P(VDF-HFP) membrane layer of about 1.5 µm on each of the surface of the positive electrode plate and the surface of the negative electrode plate by adopting the MLD technology;
S3: dropwise add 3 µL/cm² of electrolyte solution onto the P(VDF-HFP) membrane, and allow the electrolyte solution to totally wet the P(VDF-HFP) membrane and be adsorbed therein to form an interface modification layer; that is, obtain a ternary positive electrode plate and a lithium metal negative electrode plate of which the surfaces have a high-ionic conductivity macromolecule layer; and
S4: stack the positive electrode plate, the sulfide solid-state electrolyte, and the negative electrode plate sequentially to obtain a solid-state battery cell assembly.

The solid-state battery cell assembly was placed in an outer package, and a back-end process of cell manufacturing was performed to obtain a solid-state battery cell.

### Example 3

The embodiment provides a solid-state battery cell assembly, a solid-state battery cell, and a preparation method therefor.

The solid-state battery cell assembly in the embodiment is the same as Example 2 in all aspects except for the thickness of the interface modification layer.

The preparation method for the solid-state battery cell assembly in the embodiment includes the following steps:
perform preparation with reference to the preparation method for the solid-state battery cell assembly in Example 2, only except that deposit a P(VDF-HFP) membrane layer on each of the surface of the positive electrode plate, the surface of the negative electrode plate, and the surface of the solid-state electrolyte firstly by adopting MLD, and then adsorb an electrolyte solution to form an interface modification layer.

The solid-state battery cell assembly was placed in an outer package, and a back-end process of cell manufacturing was performed to obtain a solid-state battery cell.

### Example 4

The embodiment provides a solid-state battery cell assembly, a solid-state battery cell, and a preparation method therefor.

The solid-state battery cell assembly in the embodiment includes a lithium iron phosphate positive electrode plate, a graphite negative electrode plate, and LISICON oxide solid-state electrolyte, and the positive electrode plate, the oxide solid-state electrolyte, and the graphite negative electrode plate are stacked sequentially. A 2 µm of ZIF series MOF structural membrane layer is stacked both between the positive electrode plate and the oxide solid-state electrolyte and between the negative electrode plate and the oxide solid-state electrolyte, and an electrolyte solution is adsorbed onto the MOF structural membrane layer, where the content of the electrolyte solution in the MOF structural membrane layer is 5 µL/cm², and the electrolyte solution is 1.2 moL/L of LiPF₆+EC/EMC/DMC (volume ratio of 1:1:1).

The preparation method for the solid-state battery cell assembly in the embodiment includes the following steps:
S1: take a lithium iron phosphate positive electrode plate, a graphite negative electrode plate, and oxide solid electrolyte, and etch the oxide solid electrolyte with Ar plasma for 30 s to obtain oxide solid electrolyte which has a clean surface;
S2: mix MOF monomers well with a binder, a dispersing agent, and a solvent, spray-coat 2 µm of MOF monomers on the surface of the oxide solid electrolyte, and perform drying to obtain a MOF membrane layer;
S3: dropwise add 5 µL/cm² of electrolyte solution onto the MOF membrane layer, and allow the electrolyte solution to totally wet the MOF membrane layer and be adsorbed therein to form an interface modification layer; that is, obtain oxide solid electrolyte of which the surface has the MOF membrane layer; and
S4: stack the positive electrode plate, the oxide solid-state electrolyte, and the negative electrode plate sequentially to obtain a solid-state battery cell assembly.

The solid-state battery cell assembly was placed in an outer package, and a back-end process of cell manufacturing was performed to obtain a solid-state battery cell.

### Example 5

The embodiment provides a solid-state battery cell assembly, a solid-state battery cell, and a preparation method therefor.

The solid-state battery cell assembly in the embodiment includes an LiCoO₂ positive electrode plate, an Si negative electrode plate, and NASICON oxide solid-state electrolyte, and the positive electrode plate, the oxide solid-state electrolyte, and the Si negative electrode plate are stacked sequentially. A 3 µm of fluorinated polyethylene membrane layer is stacked both between the positive electrode plate and the oxide solid-state electrolyte and between the negative electrode plate and the oxide solid-state electrolyte, and an electrolyte solution is adsorbed onto the fluorinated polyethylene membrane layer, where the content of the electrolyte solution in the fluorinated polyethylene membrane layer is 7 µL/cm², and the electrolyte solution is 2M of LiClO₄+EC/DEC/PC (volume ratio of 5:2:3), 5% by mass of membrane-forming additive FEC.

The preparation method for the solid-state battery cell assembly in the embodiment includes the following steps:
S1: take a lithium cobalt oxide positive electrode plate, an Si negative electrode plate, and NASICON oxide solid electrolyte, and etch the oxide solid electrolyte with Ar plasma for 60 s to obtain oxide solid electrolyte which has a clean surface;
S2: grow a 20 µm of VYLON polyester resin membrane layer on each of both sides of the NASICON solid electrolyte by adopting the MLD technology;
S3: dropwise add 20 µL/cm² of electrolyte solution onto the membrane layer on the surface of the NASICON solid electrolyte, and allow the electrolyte solution to totally wet the membrane layer and be adsorbed therein to form an interface modification layer; that is, obtain NASICON oxide solid electrolyte of which the surface has an interface enhancement membrane layer; and
S4: stack the positive electrode plate, the oxide solid-state electrolyte on which the membrane layer is compounded, and the negative electrode plate sequentially to obtain a solid-state battery cell assembly.

The solid-state battery cell assembly was placed in an outer package, and a back-end process of cell manufacturing was performed to obtain a solid-state battery cell.

### Example 6

The embodiment provides a solid-state battery cell assembly, a solid-state battery cell, and a preparation method therefor.

The solid-state battery cell assembly in the embodiment includes a M3P (lithium ferric manganese phosphate) positive electrode plate, a lithium metal negative electrode plate, and Li₂S-GeS₂-P₂S sulfide solid-state electrolyte, and the positive electrode plate, the sulfide solid-state electrolyte, and the lithium metal negative electrode plate are stacked sequentially. A 20 µm of 8(polyethylene oxide (PEO)) membrane layer is stacked both between the positive electrode plate and the sulfide solid-state electrolyte and between the negative electrode plate and the sulfide solid-state electrolyte, an electrolyte solution is adsorbed onto the PEO membrane layer, where the content of the electrolyte solution in the PEO membrane layer is 7 µL/cm², and the electrolyte solution is 2M of LiClO₄+EC/MP/DMSO (volume ratio of 6:2:2), 8% by mass of membrane-forming additive FEC.

The preparation method for the solid-state battery cell assembly in the embodiment includes the following steps:
S1: take an M3P (lithium ferric manganese phosphate) positive electrode plate, a lithium metal negative electrode plate, and an Li₂S-GeS₂-P₂S sulfide solid electrolyte, and etch the solid electrolyte with Ar plasma for 120 s to obtain sulfide solid electrolyte which has a clean surface;
S2: grow a 50 µm of PEO membrane layer on each of both sides of the sulfide solid electrolyte by adopting the in-situ polymerization technology (ethylene oxide reacting with Lewis acid);
S3: dropwise add 50 µL/cm² of electrolyte solution onto the PEO membrane layer on the surface of the sulfide solid electrolyte, and allow the electrolyte solution to totally wet the membrane layer and be adsorbed therein to form an interface modification layer; that is, obtain solid electrolyte of which the surface has an interface enhancement membrane layer; and
S4: stack the positive electrode plate, the sulfide solid-state electrolyte on which the membrane layer is compounded, and the negative electrode plate sequentially to obtain a solid-state battery cell assembly.

The solid-state battery cell assembly was placed in an outer package, and a back-end process of cell manufacturing was performed to obtain a solid-state battery cell.

### Example 7

The embodiment provides a solid-state battery cell assembly, a solid-state battery cell, and a preparation method therefor.

The solid-state battery cell assembly in the embodiment includes an Li_{1.2}Mn_{0.54}Co_{0.13}N_{i0.13} (lithium-rich manganese-based positive electrode) positive electrode plate, a lithium metal negative electrode plate, and Li₂SC_{2/3}Cl₄ halide solid-state electrolyte, and the positive electrode plate, the halide solid-state electrolyte, and the lithium metal negative electrode plate are stacked sequentially. A 50 µm of polyethylene/polypropylene membrane layer is stacked both between the positive electrode plate and the halide solid-state electrolyte and between the negative electrode plate and the halide solid-state electrolyte, an electrolyte solution is adsorbed onto the polyethylene/polypropylene membrane layer, where the content of the electrolyte solution in the polyethylene/polypropylene membrane layer is 80 µL/cm², and the electrolyte solution is 3M of LiBF₄+VC/MA/DMSO (volume ratio of 7: 2: 1), 10% by mass of membrane-forming additive FEC.

The preparation method for the solid-state battery cell assembly in the embodiment includes the following steps:
S1: take an Li_{1.2}Mn_{0.54}Co_{0.13}N_{i0.13} (lithium-rich manganese-based positive electrode) positive electrode plate, a lithium metal negative electrode plate, and Li₂SC_{2/3}Cl₄ halide solid electrolyte, and etch the halide solid electrolyte with Ar plasma for 120 s to obtain halide solid electrolyte which has a clean surface;
S2: grow an 80 µm fluorinated polyethylene membrane layer on each of both sides of the halide solid electrolyte by adopting the MLD;
S3: dropwise add 80 µL/cm² of electrolyte solution onto the polyethylene/polypropylene membrane layer on the surface of the halide solid electrolyte, and allow the electrolyte solution to totally wet the membrane layer and be adsorbed therein to form an interface modification layer; that is, obtain solid electrolyte of which the surface has an interface enhancement membrane layer; and
S4: stack the positive electrode plate, the halide solid-state electrolyte on which the membrane layer is compounded, and the negative electrode plate sequentially to obtain a solid-state battery cell assembly.

The solid-state battery cell assembly was placed in an outer package, and a back-end process of cell manufacturing was performed to obtain a solid-state battery cell.

### Comparative Example A1

This comparative example provides a solid-state battery cell assembly, a solid-state battery cell, and a preparation method therefor.

Compared with that in Example 1, the solid-state battery cell assembly in this comparative example does not have an interface modification layer of a PET membrane containing an electrolyte solution disposed between interfaces between a lithium iron phosphate positive electrode plate and oxide solid-state electrolyte or between a graphite negative electrode plate and the oxide solid-state electrolyte, that is, compared with that in Example 1, the solid-state battery cell assembly does not contain the interface modification layer, and is the same as the solid-state battery cell assembly in Example 1 in other aspects.

The preparation method for the solid-state battery cell assembly in this comparative example includes the following steps:
S1: stack the positive electrode plate, the oxide solid-state electrolyte, and the negative electrode plate sequentially to obtain a solid-state battery cell assembly; and
S2: place the solid-state battery cell assembly in an outer package, and perform a back-end process of cell manufacturing to obtain a solid-state battery cell.

### Solid-state battery cell related performance testing

Perform tests on related electrochemical performance as shown in Table 1 on the solid-state battery cell in Example 1 to Example 7 and Comparative Example 1, where test methods and conditions for the related performance were as follows:

Test method for interface impedance (Ω): Form the solid-state battery cells in Example 1 to Example 7 and the Comparative Example 1, and test the solid-state battery cells by using the CHIN Electrochemical Workstation at a frequency range of 100 kHz to 0.01 Hz.

Polarization overpotential test: Use a blue battery testing system, allow the solid-state battery cell to stand for 3 min, record the voltage value V1, discharged at 0.1C, and record the instantaneous discharge voltage V2, and the polarization overpotential V1-V2.

### Cycle performance method:

Test methods and conditions for cycle performance of solid-state battery cells in Example 1 to Example 4, and Comparative Example 1: Perform tests on related electrochemical performance as shown in Table 2, where test conditions were as follows: The test temperature was 45°C, the charge-discharge rate was 1C, and the charge-discharge voltage ranges from 2.5 V to 4.2 V (vs. Li⁺/Li).

Test method and conditions for cycle performance of solid-state battery cell in Example 5: Perform tests on related electrochemical performance as shown in Table 2, where test conditions were as follows: The test temperature was 25°C, the charge-discharge rate was 0.33C, and the charge-discharge voltage ranges from 2.5 V to 4.5 V (vs. Li⁺/Li).

Test method and conditions for cycle performance of solid-state battery cell in Example 6: Perform tests on related electrochemical performance as shown in Table 2, where test conditions were as follows: The test temperature was 25°C, the charge-discharge rate was 0.33C, and the charge-discharge voltage ranges from 2.5 V to 4.2 V (vs. Li⁺/Li).

Test method and conditions for cycle performance of solid-state battery cell in Example 7: Perform tests on related electrochemical performance as shown in Table 2, where test conditions were as follows: The test temperature was 20°C, the charge-discharge rate was 0.5C, and the charge-discharge voltage ranges from 2.8 V to 4.8 V (vs. Li⁺/Li).

The test results of Example 1 to Example 7 and Comparative Example 1 are shown in Table 1.

**Table 1**

| Implementation | Impedance (Ω) of interface between positive electrode and solid-state electrolyte | Impedance (Ω) of interface between negative electrode and solid-state electrolyte | 0.1C charge and discharge polarization overpotential (mV) | Number of cycles with a capacity retention rate of 80% at 0.1C |
|---|---|---|---|---|
| Example 1 | 75 | 72 | 82 | 732 |
| Comparative | 873 | 536 | 872 | 549 |
| Example 1 | | | | |
| Example 2 | 60 | 45 | 62 | 720 |
| Example 3 | 67 | 53 | 71 | 687 |
| Example 4 | 72 | 48 | 65 | 953 |
| Example 5 | 52 | 39 | 64 | 1004 |
| Example 6 | 64 | 37 | 58 | 932 |
| Example 7 | 78 | 40 | 72 | 1185 |

As can be seen from Table 1 that after the interface modification layer is modified, that is, the composite membrane formed by the base membrane and the electrolyte solution adsorbed onto the base membrane is modified, the impedance values at the interfaces between the positive electrode-the solid-state electrolyte and between the negative electrode and the solid-state electrolyte significantly decrease from the original impedance value > 100 Ω to < 100 Ω. Specifically, for example, the impedance value at the interface between the positive electrode and the solid-state electrolyte in Comparative Example 1 decreases from 873 Ω to 75 Ω in Example 1, and the impedance value at the interface between the negative electrode and the solid-state electrolyte decreases from 536 Ω to 72 Ω in Example 1. The reduction of the impedance is also beneficial for improving the polarization overpotential at the interface. When charge and discharge are performed at a rate of 0.1C, the polarization overpotential of the battery is reduced from originally > 100 mV to 100 mV or less. Specifically, for example, the polarization overpotential is reduced from 872 mV in Comparative Example 1 to 82 mV in Example 1, thereby significantly improving the charge and discharge capability of the battery. Meanwhile, the interface modification layer also significantly improves the cycle performance of the battery. This is mainly attributed to that the introduction of the interface modification layer makes the original solid-solid interface changed into a solid-liquid interface with good interface contact and wettability, and without ion bridge breaking, and the introduction of the solid-liquid interface blocks an electronic path of the solid-solid interface, reduces the leakage current of the battery, and facilitates the charge and discharge stability of the battery. Therefore, the cycle performance of the battery is obviously improved.

It can be seen that according to the solid-state battery cell assembly provided in the embodiment, since the interface modification layer is added at the solid-solid interface between the electrode and the solid-state electrolyte, a good and stable wetting effect can be achieved on the solid-solid interface between the electrode and the solid-state electrolyte layer, thereby significantly reducing the impedance between the solid-solid interfaces, so that the electrochemical performance and the stability of the electrochemical performance of the solid-state battery are effectively improved. Meanwhile, it also indirectly proved that the interface modification layer can effectively reduce the direct contact of the electrolyte solution contained in the interface modification layer with an electrode(s) (positive electrode or/and negative electrode) and the solid-state electrolyte layer, and thereby the consumption of the electrolyte solution in the charge and discharge processes can be effectively reduced, and meanwhile, the absorption of the electrolyte solution by the solid-state electrolyte layer is also reduced.

Finally, it should be noted that: the foregoing embodiments are merely used for describing the technical solutions of the present application, but are not intended to limit the present application. Although the present application is described in details with reference to the foregoing embodiments, those of ordinary skill in the art may understand that: modifications may still be made to the technical solutions described in the foregoing embodiments, or equivalent replacements may be made to some or all of the technical features; and these modifications or replacements will not cause the essence of corresponding technical solutions to depart from the scope of the technical solutions in various embodiments of the present application, and they should all be included in the scope of the claims and specification of the present application. Especially, as long as there is no structural conflict, the various technical features mentioned in each embodiment can be combined in any way. The present application is not limited to the particular embodiments disclosed herein, but include all technical solutions that fall within the scope of the claims.

## Claims

1. A solid-state battery cell assembly, comprising a positive electrode, a negative electrode, and a solid-state electrolyte layer disposed between the positive electrode and the negative electrode, wherein: a base membrane is further disposed between the positive electrode and the solid-state electrolyte layer and/or between the negative electrode and the solid-state electrolyte layer, and an electrolyte solution is adsorbed onto the base membrane.

2. The solid-state battery cell assembly according to claim 1, wherein: the amount of the electrolyte solution adsorbed onto the base membrane per unit area is 1-100 µL cm⁻².

3. The solid-state battery cell assembly according to claim 1 or 2, wherein: the base membrane onto which the electrolyte solution is adsorbed at least has any one of the following (1) to (3):
(1) the thickness of a single base membrane is 0.1-100 µm, optionally, 1-3 µm;
(2) ionic conductivity is 10⁻²-10⁻¹ S cm⁻¹; and
(3) electronic conductivity is > 0 but ≤ 10⁻¹⁰ S cm⁻¹.

4. The solid-state battery cell assembly according to any one of claims 1 to 3, wherein: the base membrane is bonded to the surface of the solid-state electrolyte layer; and/or
the base membrane is bonded onto the surface of the positive electrode that faces the solid-state electrolyte layer; and/or
the base membrane is bonded onto the surface of the negative electrode that faces the solid-state electrolyte layer.

5. The solid-state battery cell assembly according to any one of claims 1 to 4, wherein: the electrolyte solution at least comprises any one of the following (1) to (4):
(1) the molar concentration of electrolyte contained in the electrolyte solution is 0.1-5 mol/L;
(2) the electrolyte contained in the electrolyte solution comprises at least one of lithium hexafluoroarsenate, lithium perchlorate, lithium tetrafluoroborate, lithium hexafluorophosphate, lithium bis(fluorosulfonyl)imide, lithium bis(trifluoromethanesulfonyl)imide, lithium bis(oxalato)borate, and lithium difluoro(oxalato)borate;
(3) a solvent contained in the electrolyte solution comprises at least one of cyclic carbonate, chain carbonate, cyclic carboxylate, chain carboxylate, cyclic ether, chain ether, dimethyl sulfoxide, and sulfolane; and
(4) the electrolyte solution further contains an additive.

6. The solid-state battery cell assembly according to claim 5, wherein: the mass percentage content of the additive in the electrolyte solution is 0.1-10%; and/or
the additive comprises at least one of fluoroethylene carbonate, vinylene carbonate, vinylethylene carbonate, allyl ethyl carbonate, vinyl acetate, catechol carbonate, and lithium difluoro(oxalato)borate.

7. The solid-state battery cell assembly according to any one of claims 1 to 6, wherein: the base membrane at least comprises any one of the following (1) to (6):
(1) porosity is 30-60%;
(2) air permeability is 100-1000 s/100 ml;
(3) liquid adsorption amount is 40-1000%;
(4) tensile strength: > 8 N/25 mm in a transverse direction, and > 15 N/25 mm in a longitudinal direction;
(5) stretch rate: > 300% in the transverse direction, and > 180% in the longitudinal direction; and
(6) puncture strength is > 20 N.

8. The solid-state battery cell assembly according to any one of claims 1 to 7, wherein: the base membrane comprises a polymer membrane.

9. The solid-state battery cell assembly according to claim 8, wherein: a polymer of the polymer membrane comprises at least one of crystalline saturated polyester, dimethyl siloxane cross-linked polymer, polyolefin, halogenated polyolefin, and a MOF structural material.

10. The solid-state battery cell assembly according to claim 9, wherein: the crystalline saturated polyester comprises at least one of PET, crystalline dimer acid polyester polyol, crystalline polyesterimide, polybutylene terephthalate, poly(ethylene-co-1,4-cyclohexanedimethanol terephthalate), and VYLON polyester resin;
the dimethyl siloxane cross-linked polymer comprises at least one of vinyl dimethicone cross-linked polymer, amodimethicone cross-linked polymer, and aminopropyl dimethicone;
the polyolefin and the halogenated polyolefin independently comprise at least one of polyethylene, polypropylene, poly(1-butene), poly(4-methyl-1-pentene), polyvinyl chloride, polyvinylidene chloride, and polyvinylidene fluoride; and
the MOF structural material comprises at least one structural material of an IRMOF series, a ZIF series, a CPL series, an MIL series, a PCN series, and a UiO series.

11. The solid-state battery cell assembly according to claim 10, wherein: the IFMOF series structural material comprises at least one of IRMOF-1, IRMOF-3, IRMOF-4, IRMOF-8, IRMOF-9, IRMOF-10, IRMOF-11, IRMOF-12, IRMOF-13, IRMOF-14, IRMOF-16, IRMOF-18, IRMOF-61, IRMOF-62, IRMOF-3-AM1, Fe/IRMOF-3, Mg-IRMOF-74, IRMOF-3-OH, IRMOF-3-SH, Fe/IRMOF-3-900, and IRMOF3-sal;
the ZIF series structural material comprises at least one of IF-1, ZIF-2, ZIF-4, ZIF-5, ZIF-7, ZIF-8, nZIF-8, ZIF-9, ZIF-10, ZIF-11, ZIF-12, ZIF-14, ZIF-20, ZIF-23, ZIF-60, ZIF-61, ZIF-62, ZIF-64, ZIF-65, ZIF-67, ZIF-68, ZIF-69, ZIF-70, ZIF-71, ZIF-72, ZIF-73, ZIF-74, ZIF-75, ZIF-76, ZIF-77, ZIF-78, ZIF-95, ZIF-100, ZIF-268, ZIF-224, and Zn/Co-ZIF;
the CPL series structural material comprises at least one of CPL-5Cu, CPL-5Cu, CPL-5Cu, CPL-5Cu, and CPL-5Cu;
the MIL series structural material comprises at least one of MIL-53Cr, MIL-100 Cr, MIL-101 Cr, MIL-100 Fe, MIL-177-LT, MIL-177-HT, MIL-45 Co, MIL-45 Fe, MIL-53AI, MIL-53 Sc, MIL-88 Sc, MIL-8, MIL-9, MIL-47, MIL-51, MIL-59, MIL-69, MIL-88, MIL-91, MIL-96, MIL-101, MIL-103, MIL-102, MIL-110, and MIL-125;
the PCN structural material comprises at least one of PCN-6, PCN-9, PCN-12, PCN-13, PCN-14, PCN-18, PCN-22, PCN-51, PCN-61, PCN-63, PCN-100, PCN-129, PCN-131, PCN-132, PCN-137, PCN-149, PCN-150, PCN-222, PCN-224, PCN-308, and PCN-333; and
the UiO series structural material comprises at least one of UiO-66, UiO-67, and UiO-68.

12. A preparation method for a solid-state battery cell assembly, comprising the following steps:
providing a positive electrode, a negative electrode, and a solid-state electrolyte membrane;
stacking the positive electrode, the solid-state electrolyte membrane, and the negative electrode, and disposing a base membrane stacked between the positive electrode and the solid-state electrolyte membrane and/or between the negative electrode and the solid-state electrolyte membrane,
wherein an electrolyte solution is adsorbed onto the base membrane.

13. The preparation method according to claim 12, wherein: the procedure of disposing a base membrane stacked between the positive electrode and the solid-state electrolyte membrane and/or between the negative electrode and the solid-state electrolyte membrane comprises the following steps:
forming the base membrane on at least one of a surface of the positive electrode, a surface of the negative electrode, and a surface of the solid-state electrolyte membrane;
loading the electrolyte solution into the base membrane; and
stacking the positive electrode, the solid-state electrolyte membrane, and the negative electrode, and making the base membrane onto which the electrolyte solution is adsorbed stacked between the positive electrode and the solid-state electrolyte layer and/or between the negative electrode and the solid-state electrolyte layer.

14. The preparation method according to claim 13, wherein the base membrane comprises a polymer membrane, and the procedure of forming the base membrane on at least one of a surface of the positive electrode, a surface of the negative electrode, and a surface of the solid-state electrolyte membrane comprises the following steps:
performing membrane-forming treatment on a mixed solution comprising polymer monomers, a solvent, and an initiator on the surface of the positive electrode, the surface of the negative electrode, and the surface of the solid-state electrolyte membrane to obtain a polymer precursor membrane; and
carrying out a polymer reaction on the polymer precursor membrane to produce the base membrane.

15. The preparation method according to claim 14, wherein the procedure of membrane-forming treatment comprises at least one of a molecular layer deposition process, blade coating, spray coating, spin coating, and casting.

16. The preparation method according to any one of claims 13 to 15, wherein: before the step of forming the base membrane on at least one of a surface of the positive electrode, a surface of the negative electrode, and a surface of the solid-state electrolyte membrane, the step of performing plasma treatment on at least one of the surface of the positive electrode, the surface of the negative electrode, and the surface of the solid-state electrolyte membrane is further comprised, the base membrane being formed on the surface subjected to the plasma treatment.

17. The preparation method according to claim 12, wherein: the procedure of disposing a base membrane stacked between the positive electrode and the solid-state electrolyte membrane and/or between the negative electrode and the solid-state electrolyte membrane comprises the following steps:
providing the base membrane;
loading the electrolyte solution into the base membrane; and
stacking the positive electrode, the solid-state electrolyte membrane, the negative electrode, and the base membrane onto which the electrolyte solution is adsorbed.

18. A battery, comprising the solid-state battery cell assembly according to any one of claims 1 to 11 or the solid-state battery cell assembly prepared by the preparation method according to any one of claims 12 to 17.

19. The battery according to claim 18, wherein the battery comprises any one of a solid-state battery cell, a battery group, and a battery pack.

20. A power consuming apparatus, wherein the power consuming apparatus comprises the battery according to claim 18 or 19, the battery being configured to supply electric energy.

21. An energy storage apparatus, comprising the battery according to claim 18 or 19.
